# EUROPÄISCHE PATENTSCHRIFT

(11) **EP 2 781 879 B1**
(45) Veröffentlichungstag und Bekanntmachung des Hinweises auf die Patenterteilung: **30.09.2015**
(21) Anmeldenummer: 13160068.6
(22) Anmeldetag: 19.03.2013
(51) Int. Cl.: G01C 15/00

(54) **Konstruktionslasersystem aus Rotationslaser und Laserreceiver, mit Funktionalität zur automatischen Bestimmung der Laserreceiver-Richtung**
Construction laser system comprising rotation laser and laser receiver, with functionality for automatic determination of the laser receiver direction
Système de laser de construction constitué d'un laser rotatif et d'un récepteur laser, doté d'une fonctionnalité de détermination automatique de la direction du récepteur laser

(43) Veröffentlichungstag der Anmeldung: 24.09.2014
(73) Patentinhaber: Leica Geosystems AG, 9435 Heerbrugg (CH)
(72) Erfinder: Fessler, Thilo, A-6971 Hard (AT); Stöckel, Bernd, CH-9445 Rebstein (CH)
(74) Vertreter: Gyaja, Christoph Benjamin

(56) Entgegenhaltungen:
- EP-A1- 2 453 204
- EP-A2- 1 174 682

## Beschreibung

Die Erfindung betrifft ein Konstruktionslasersystem für Arbeiten im Bau- und/oder Innenausbau, aus Rotationslaser und Laserreceiver, mit hinsichtlich Bereitstellungsaufwand und Ausführungsgeschwindigkeit verbesserter Funktionalität zur Bestimmung einer Richtung in der sich der Laserreceiver aus Sicht des Rotationslasers befindet. Ferner betrifft die Erfindung ein entsprechendes Verfahren mit Rotationslaser und Laserreceiver, wobei in verbesserter Weise ein Bestimmen der Richtung, in der sich der Laserreceiver aus Sicht des Rotationslasers befindet, erfolgt, sowie ein Computerprogrammprodukt zur Ausführung dieses Verfahrens.

Es ist bekannt, auf Baustellen z.B. von Gebäuden oder bei Strassenbau- und/oder Erdbauarbeiten Rotationslaser einzusetzen. Insbesondere werden Rotationslaser eingesetzt, in denen ein durch eine Lasereinheit emittierter Laserstrahl (im sichtbaren oder infraroten Wellenlängenbereich) durch Ablenkung über ein rotierendes Umlenkprisma eine Bezugsfläche erzeugt, durch die dann eine präzise Ebenenreferenz (insbesondere eine Höhenreferenz im Fall einer horizontalen Ebene) bereitgestellt wird.

Viele der heute existierenden Rotationslaser weisen dabei eine Strahl-Selbsthorizontierfunktionalität (auch bekannt als Self-Levelling) auf. Zur Erfüllung einer solchen Strahl-Selbsthorizontierfunktionalität sind verschiedene technische Lösungen bekannt, die zwar sowohl rein mechanischer Art sein können, sich heute jedoch meist auf Sensorik optischer Art stützen. Beispielsweise kann das insbesondere die Lasereinheit und das drehbare Umlenkprisma umfassende Herzstück des Rotationslasers (d.h. das Laser-Core-Modul) pendelnd aufgehängt sein, sodass eine Horizontalitätstreue unter Ausnutzung der Gravitation erzeugt werden kann. Das Laser-Core-Modul kann vorteilhaft dabei jedoch um zwei Achsen (zumindest geringfügig in einem Bereich von z.B. +5°) motorisiert präzise neigbar an einem äusseren Gehäuse des Geräts aufgehängt sein und mit einem Neigungssensor bzw. Horizintierungssensor ausgestattet sein, dessen Anzeige bzw. Signal ausgelesen und als Ausgangsgrösse für eine aktive Änderung der Neigungsstellung des Laser-Core-Moduls benutzt werden kann.

Je nach Ausbaustufe weisen bekannte Rotationslaser heute dabei auch eine Funktion (mit entsprechender Mechanik, Sensorik und Steuerung) zur gezielten, gewünschten Neigung der Laserebene relativ zur Horizontalen in einer oder zwei Richtungen auf. Dafür kann das insbesondere die Lasereinheit und das drehbare Umlenkprisma umfassende Herzstück des Rotationslasers gezielt motorisiert um eine Achse oder um zwei Achsen geneigt und in gewünschte Neigungsstellungen gebracht werden, sodass damit auch die Rotationsachse und folglich auch die aufgespannte Ebene gewünscht geneigt wird. Entsprechende Mechanismen, Sensoriken und Steuerungen dafür sind im Stand der Technik hinlänglich bekannt und z.B. in den Patentliteratur-Publikationen US 5,485,266 A, US 2004/ 0125356 A1, EP 1 790 940 A2, EP 1 901 034 A2, EP 2 327 958 A1 und EP 2 522 954 A1 beschrieben.

Wird dabei der durch den Rotationslaser emittierte rotierende Laserstrahl im sichtbaren Spektrum ausgesendet und trifft dieser auf eine Fläche wie z.B. eine Wand, einen Boden oder eine Decke des Gebäudes, ist dort eine Bezugslinie als Basis für weitere Maßnahmen sichtbar.

Zum präzisen Übertragen der durch den rotierenden Laserstrahl angegebenen Bezugsebene bzw. Bezugshöhe z.B. auf eine Wand oder ins Gelände sind handhaltbare Laserempfänger (auch Laserreceiver genannt) bekannt, die eine Position relativ zu einer durch den Rotationslaser aufgespannten Referenzfläche hochgenau bestimmen und indizieren können.

Aus dem Stand der Technik bekannte handhaltbare Laserempfänger zur Bestimmung einer Position relativ zur Referenzfläche können dabei einen eine Vielzahl von photosensitiven Elementen umfassenden Laserstrahl-Detektor aufweisen, der zur Erzeugung eines Ausgangssignals bei Auftreffen des Laserstrahls auf dem Laserstrahl-Detektor ausgebildet ist. Im Detail ist dabei der Laserstrahl-Detektor meist so ausgebildet, dass zudem eine Auftreffposition des Laserstrahls auf der Laserstrahl-Detektor-Fläche abgeleitet werden kann, wofür die photosensitiven Elemente - betrachtet in aufrechter Betriebsstellung des Geräts - in einer vertikal ausgerichteten Sensorzeile aneinander gereiht sein können, sodass sich also der Laserstrahl-Detektor zumindest über einen eindimensionalen Bereich auf dem Laserreceiver erstreckt. Zudem sind meistens eine Auswerteeinheit zur Ermittlung der Position des Laserempfängers relativ zur durch den rotierenden Laserstrahl definierten Referenzhöhe anhand des Outputs des Laserstrahl-Detektors sowie ein Indikator für die ermittelte Position (etwa eine visuelle Anzeige), insbesondere ausgebildet zur Indikation, ob der Laserempfänger mit der Referenzfläche exakt koinzidiert, in das Laserempfängergerät integriert. Die Position kann dabei beispielsweise anhand eines Verhältnisses von mehreren Ausgangssignalen bestimmt werden (z.B. als Mittelpunkt jenes Teil-Bereichs auf der Laserstrahl-Detektor-Zeile, der durch den Laserstrahl beleuchtet wird).

Derartige handhaltbare Laserempfänger können insbesondere dann zum Einsatz kommen, wenn die durch den rotierenden Laserstrahl abgebildete Linie mit dem Auge nur schwer oder nicht präzise genug erkennbar ist. Dies ist z.B. der Fall etwa bei grösseren Entfernungen von Rotationslaser (z.B. begründet auf eine Divergenz des Laserstrahls [-> abgebildete Linie wird zu breit] oder eine geringe Lichtleistung [-> abgebildete Linie wird zu schwach sichtbar] (die aus Augensicherheitsgründen gewissen Begrenzungen unterliegt) und/oder eine hohe Umgebungshelligkeit) oder auch bei Verwendung von Laserlicht im nicht sichtbaren Wellenlängenbereich.

In solchen Fällen ist es anhand derartiger Laserempfänger nun ermöglicht, den Laserstrahl zu finden und die durch einen rotierenden Laserstrahl definierte Laserebene (bzw. Referenzhöhe) zu indizieren, abzulesen und die Höheninformation ins Gelände bzw. auf eine Wand (etc.) zu übertragen. Beispielsweise kann - indiziert durch den Laserempfänger - eine entsprechende Markierung in der Referenzhöhe angebracht werden.

Dafür wird benutzerseitig der Laserempfänger beispielsweise in vertikaler Richtung suchend auf und ab bewegt und schliesslich in jene Position gebracht, in welcher der Indikator eine Koinzidenz mit der Referenzfläche anzeigt. Beispielsweise kann als Indikator eine visuelle Anzeige vorgesehen sein, die (etwa durch Leuchtpfeile oder unterschiedlichfarbene LEDs) darüber informiert, ob sich ein definierter Nullpunkt des Laserempfängers (z.B. ein Flächenmittelpunkt der Detektorfläche)
□ exakt auf Höhe der Referenzfläche,
□ oberhalb der Referenzfläche oder
□ unterhalb der Referenzfläche
befindet.

Beispiele für solche Laserempfänger sind in den Druckschriften EP 2 199 739 A1 und US 4,240,208 geoffenbart.

Um dem Benutzer ein einfaches Übertragen der durch den Laserempfänger ermittelten und indizierten Referenzhöhe bereitzustellen, kann am Gehäuse des Laserempfängers in Höhe des definierten Nullpunkts eine Höhenmarke vorgesehen sein (z.B. eine Kerbe oder eine aufgedruckte Linie seitlich am Gehäuse).

In der US 7,394,527 wird ein System aus Lasersender und Laserempfänger offenbart, wobei ein Abstand des Laserempfängers vom Lasersender ermittelt werden soll. Dazu wird vorgeschlagen, zwei zueinander parallele Laserstrahlen rotierend auszusenden und abhängig von Rotationsgeschwindigkeit und Zeitversatz der direkt nacheinander empfangenen Laserimpulse der beiden Laserstrahlen den Abstand zu ermitteln. Analog dazu könne - bei Vorhandensein von mehreren parallel zueinander versetzten Detektorstreifen seitens des Empfängers (mit genau bekanntem Parallelversatz der Detektorstreifen zueinander) - alternativ auch ein einziger Laserstrahl rotierend ausgesendet werden, wobei dann abhängig vom Zeitversatz der nacheinander durch die jeweiligen Detektorstreifen empfangenen Laserimpulse die Entfernung vom Empfänger zum Lasersender bestimmt wird.

In der US 5,953,108 ist ein System aus Rotationslaser und Laserempfänger offenbart, wobei der Laserstrahl mit einer ersten Geschwindigkeit rotiert, wenn keine Nachricht an den Laserempfänger übermittelt wird, und mit einer von der ersten Rotationsgeschwindigkeit verschiedenen, zweiten Geschwindigkeit rotiert, um dadurch eine vordefinierte Nachricht bzgl. eines Statuszustands des Rotationslasers (z.B. "schwache Batterie") zu übermitteln.

Für eine Reihe von bekannten Funktionen und Anwendungen eines Systems aus Rotationslaser (insbesondere Dual-Grade-Rotationslaser) und Laserreceiver kann zudem (z.T. zumindest grobe) Kenntnis über eine Laserreceiver-Richtung erforderlich oder zumindest hilfreich sein, d.h. Kenntnis über eine Richtung, in welcher sich der Laserreceiver aus Sicht des Rotationslasers befindet (z.B. bzgl. eines Rotationslaser-internen Koordinatensystems).

Beispiele für derartige Funktionen und Anwendungen können dabei sein:
a) Grade-Catch (auch Plane-Catch oder Slope-Catch genannt), z.B. bei Verlust des Receivers aus dem eingelockten Zustand (siehe b)):
   Es erfolgen ein Aufsuchen des Receivers durch variierendes Neigen der durch den rotierenden Laserstrahl aufgespannten Referenzebene und ein Auffinden in Abhängigkeit von einem vom Receiver an den Rotator gesendeten Treffer-Signal.

   Berührungspunkt der Funktion mit Laserreceiver-Richtung:
   Ist (z.B. aus einem vorherigen eingelockten Zustand) eine azimutale Richtung zum Receiver bekannt, so kann unter Zuhilfenahme dieser Laserreceiver-Richtung der Aufsuchvorgang beschleunigt werden (weniger Unsicherheiten vorhanden für das Durchführen des Aufsuchvorgangs). Ist zudem bekannt, ob der Laserreceiver die Ebene aus dem eingelockten Zustand nach oben oder unten verlassen hat, kann - wiederum unter Zuhilfenahme der Laserreceiver-Richtung - der Aufsuchvorgang nochmals zielgerichteter ausgeführt werden.
b) Grade-Lock (auch Plane-Lock bzw. Slope-Lock genannt, ggf. mit Tracking), was nur dann erfolgen kann, wenn die Referenzebene bereits (zumindest irgendwo) auf den Detektorbereich des Receivers trifft, also insbesondere direkt anschliessend an ein Grade-Catch (d.h. nach "Auffinden" des Receivers):
   Es erfolgen ein Einlocken der Referenzebene im Nullpunkt des Receivers (also gezieltes Neigen der Referenzebene, sodass diese den Nullpunkt des Receivers schneidet) und ein ggf. fortlaufendes Halten dieses Zustands (z.B. auch bei Bewegen des Receivers, was dann Tracking genannt wird), wobei durch gezieltes Nachstellen der Referenzebenenneigung fortlaufend dafür gesorgt wird, dass der Nullpunkt des Receivers mit der Referenzebene getroffen wird bzw. die Referenzebene schneidet).

   Berührungspunkt der Funktion mit Laserreceiver-Richtung:
   Das Tracking (d.h. die Nachführung der Referenzebene durch gezieltes Neigen derselben) kann bei dynamischer Bewegung des Receivers nur dann hinreichend schnell und erfolgen, wenn direkt bekannt ist, auf welche receiverseitig gemessene Abweichung zwischen aktuellem Referenzebenenauftreffpunkt und Nullpunkt des Laserreceivers mit welcher Neigungsverstellung reagiert werden muss. Hierfür kann Kenntnis über die Laserreceiver-Richtung sehr hilfreich sein, um diesen Trackingprozess zu stabilisieren, direkter zu machen und somit eine schnellere und dynamischere Nachführung zu ermöglichen.
c) Axis-Alignment/Axis-Finding:
   Es kann ein benutzerseitiges Definieren von fiktiven x'- und y'-Achsen erfolgen (d.h. fiktive Achsen, die nicht mit der aufstellungs- und konstruktionsbedingten Ausrichtung der tatsächlichen x-Neigungs- und Y-Neigungsachsen des Core-Moduls übereinstimmen), um welche die Laserebene wie vom Benutzer eingegeben geneigt werden soll. Diese benutzerseitige Eingabe der gewünschten Ausrichtung der fiktiven x'- und y'-Achsen kann erfolgen anhand von einer aktuellen Richtung zum Receiver, die es zu bestimmen gilt (sodass z.B. die fiktive x'-Achse in diese azimutale Richtung zum Receiver gelegt werden kann).

Des Weiteren kann zum Zwecke des Axis-Alignment auch eine unterstützende Funktionalität dergestalt verwirklicht sein, dass eine Signalisierung bezüglich der Qualität der Ausrichtung der Neigungsachse erfolgt, etwa durch eine Anzeige, welche die benutzerseitig bewirkte Ausrichtung des Laser-Core-Moduls unterstützt (beispielsweise eine Wertangabe oder eine Links-/Rechts-/Mitte-Information). Dies ist insbesondere dann vorteilhaft, wenn das Neigungssystem konstruktionsbedingt keine Bereitstellung fiktiver x'- und y'-Achsen ermöglicht, wie es etwa bei Rotationslasersystemen in geringeren Ausbaustufen mit ausschliesslicher Horizontierfunktion (Self-Levelling), welche über keine Mittel der mechanischen Rotation der Neigungsachse(n) verfügen.

Berührungspunkt dieser Funktion mit Laserreceiver-Richtung: Für diese Funktion (zumindest bei Definition der fiktiven x'- und y'-Achsen über eine aktuelle Richtung zum Receiver) ist Kenntnis über die Laserreceiver-Richtung erforderlich.

Spezielle Aspekte und Ausführungsformen bzgl. dieser Funktionen sind z.B. in den Patentliteratur-Publikationen US 6,055,046 A, US 6,314,650 B1 und US 6,693,706 B2 beschrieben

Folgende Methoden sind dabei (unter anderem auch aus den im direkt vorherigen Abschnitt genannten Publikationen) für die Bestimmung einer Laserreceiver-Richtung in einem System aus Rotationslaser und Laserreceiver im Stand der Technik unter anderem bekannt:
1) Auswertung eines direkt (in Echtzeit) nach receiverseitiger Detektion eines Strahls erzeugten Signals, das vom Receiver an den Rotator (z.B. per Funk) übertragen wird und Ableiten eines Emissionswinkels, in welchem der rotierende Laserstrahl wohl gerade zum Zeitpunkt des Auftreffens stand
2) Definiertes Neigen der Referenzebene um einen bekannten Neigungswert und laserreceiverseitiges Ablesen eines dadurch bewirkten Höhenversatzes des Beam-Strikes auf dem Detektor des Laserreceivers (mit Durchführung dieser Schritte für beide Neigungsachsen) und Ableiten einer Richtung zum Receiver anhand von der gegebenen Relation des jeweiligen Neigungswinkelunterschieds zum jeweiligen Höhenversatz auf dem Receiver.
3) Behaftung eines Strahlparameters der Laserstrahlung mit einer kontinuierlich winkelabhängig variierenden Information, die seitens des Receivers anhand des auftreffenden Strahls auslesbar ist und darüber die Richtung zum Receiver ableitbar macht.
4) Iterativ halbierendes Windowing anhängig von einem Treffen bzw. Nichttreffen des Laserreceivers im jeweils aktuellen Winkelbereichs-Fenster (z.B. Aussenden des Strahls nur im Winkelbereich von 0 - 180°, falls Receiver einen Treffer angezeigt hat: Aussenden des Strahls nur im Winkelbereich von 0 - 90°, falls Receiver bei 0 - 180° keinen Treffen angezeigt hat: Aussenden des Strahls nur im Winkelbereich von 180° - 270°, etc.).

Das Thema bzgl. einer Bestimmung der Laserreceiver-Richtung wird dabei unter anderem auch in den Patentliteratur-Publikationen WO 2006/070009 A2 und EP1174682 A2 behandelt.

In der Praxis haben sich die bekannten Methoden zur Bestimmung der Richtung jedoch als langsam, wenig stabil, wenig verlässlich und/oder aufwändig bzw. schwierig in der praktischen Umsetzung herausgestellt.

Methoden wie unter Punkt 1) oben beschrieben, die auf der Übertragung eines Signals vom Laserreceiver zum Rotationslaser, welches vom Zeitpunkt des Strikes auf dem Laserreceiver abhängt, und einer daraus direkt erfolgenden Ableitung der Richtungsinformation (also auf eine Echtzeitbetrachtung) basieren, sind wenig genau (da die Signal-Übertragungszeit von der jeweiligen Entfernung zwischen Receiver und Rotator abhängt) und nicht verlässlich.

Die Methoden wie unter Punkte 2) und 4) oben beschrieben sind bei Ihrer Ausführung vergleichsweise langwierig und erfordern diverse verschiedene Schritte und/oder Entscheidungsfindungen, sodass sich dadurch auch eine vergleichsweise hohe Fehleranfälligkeit ergibt. Ferner funktioniert die Methode wie unter Punkt 2) beschrieben nur bei einem aufrecht gehaltenen Receiver (bzw. führt ein schräges Halten des Receivers zu einem verfälschten Ergebnis).

Die Methode wie unter Punkt 3) beschrieben ist dabei sehr aufwändig zu realisieren, da eine Behaftung der Laserstrahlung mit kontinuierlich variierender Information erforderlich ist und zudem auch receiverseitig eine spezielle Erfassung des auftreffenden Laserstrahls (d.h. so, dass die anhaftende Information nicht verloren geht) und Auswertung hinsichtlich der Information zu erfolgen hat. Ein kontinuierlich winkelabhängig variierter Strahlparameter der Laserstrahlung kann dabei zudem bei der Auswertung eines bei Detektion der Laserstrahlung erzeugten Signals zu Ungenauigkeiten in der letztendlichen Winkelbestimmung führen (z.B. wenn sich eine globale Verschiebung des Parameters in seinem Wert, welcher winkelabhängig variiert wird, einschleicht (etwa aufgrund von Schock oder Veralterung des Geräts)).

Aufgabe der Erfindung ist somit das Bereitstellen eines hinsichtlich einer Funktionalität zur Bestimmung einer Laserreceiver-Richtung verbesserten Konstruktionslasersystems aus Rotationslaser und Laserreceiver.

Insbesondere soll dabei die Funktionalität zur Bestimmung einer Laserreceiver-Richtung robuster, schneller, zuverlässiger und/oder weniger aufwändig für die Umsetzung in der Praxis sein.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Das erfindungsgemässe Konstruktionslasersystem umfasst mindestens einen eine Lasereinheit und ein drehbares Umlenkmittel aufweisenden Rotationslaser zur Emission eines rotierenden Laserstrahls, wobei der rotierende Laserstrahl eine Referenzfläche definiert, und einen Laserempfänger mit einem zumindest sich über einen eindimensionalen Bereich auf dem Laserreceiver erstreckenden Laserstrahl-Detektor, der ausgebildet ist zur Erzeugung eines Ausgangssignals abhängig von einem Auftreffen des Laserstrahls auf dem Laserstrahl-Detektor. Zudem ist eine Auswerteeinheit vorgesehen zur Bestimmung von einer Laserreceiver-Richtung, in welcher sich der Laserreceiver aus Sicht des Rotationslasers befindet.

Die Erfindung löst sich dabei vom Stand der Technik, indem zur Bestimmung der Laserreceiver-Richtung nun ein drehwinkelbereichsabhängiges digitales mehrspuriges Codemuster verwendet wird, wobei die mehreren Spuren hier durch eine Reihe von mehreren Drehdurchgängen erzeugt und abgebildet werden, und im jeweiligen Drehdurchgang das der zugehörigen Spur entsprechende Winkelbereichsmuster über Modifikation des Laserstrahls (wie z.B. An- und Ausschaltung) erzeugt wird.

Receiverseitig kann nun pro Auftreffen des Laserstrahls (also pro "Strike") ein Signal erzeugt und an die Auswerteeinheit gesendet werden. Dort kann anhand einer Verarbeitung der Folge von eingegangenen Signalen - in Kenntnis des mehrspurigen Codemuster - der entsprechende Drehwinkelbereich, in welchem sich der Receiver wohl befinden muss, abgeleitet und somit die gesuchte Laserreceiver-Richtung bestimmt werden.

Mit anderen Worten sind dafür erfindungsgemäss in einem Speicher Information gespeichert über
- eine Vielzahl von definierten Drehwinkelbereichen bezüglich einer Drehung des Umlenkmittels und
- einen den jeweiligen Drehwinkelbereichen jeweils eindeutig zugeordneter digitaler Code aus einer Zustandswertefolge, die auf einer definierten Abfolge von Zuständen bezüglich des Laserstrahls basiert, wobei die Zustände aus einer Menge von zumindest zwei definierten unterschiedlichen diskreten Zuständen bezüglich des Laserstrahls stammen.

Ferner ist nun eine Steuereinheit vorhanden zur derartigen umlenkmitteldrehungssynchronisierten Steuerung der Lasereinheit hinsichtlich Erzeugung von den zumindest zwei unterschiedlichen diskreten Zuständen, dass in den jeweiligen Drehwinkelbereichen jeweils die dem jeweiligen Drehwinkelbereich entsprechende Abfolge von Zuständen bezüglich des Laserstrahls über - bei Ablauf von einer Reihe von Drehdurchgängen des Umlenkmittels - nacheinander erfolgende Durchquerungen des jeweiligen Drehwinkelbereichs erzeugt wird.

Auswerteeinheitsseitig kann schliesslich eine Ausgangssignal-Folge von nacheinander eintreffenden Ausgangssignalen erfasst werden, eine zu der Ausgangssignal-Folge korrespondierende Zustandswertefolge aus den gespeicherten Zustandswertefolgen identifiziert werden und die Laserreceiver-Richtung bestimmt werden abhängig von jenem Drehwinkelbereich, welcher dem der identifizierten Zustandswertefolge entsprechenden Code zugeordnet ist.

Erfindungsgemäss kann somit bei der Richtungsbestimmung sowohl auf eine ansonsten fehleranfällige Live-Adaption mit verschiedenen Entscheidungsfindungen beim Vorgang (siehe z.B. die Methoden wie eingangs unter den Punkten 2) und 4) beschrieben) als auch auf eine spezielle geräteseitige Ausbildung des Laserreceivers (siehe z.B. die Methode wie eingangs unter Punkt 3) beschrieben) verzichtet werden.

Ferner ist der erfindungsgemässe Vorgang für die Richtungsbestimmung vollautomatisch ablaufbar, wobei dieser vollumfänglich stets strikt nach vorgegebenem Schema erfolgen kann und somit hinsichtlich benötigter Zeitdauer als auch hinsichtlich des zu erwartenden Ergebnisses (z.B. was die Genauigkeit der Richtungsbestimmung betrifft) konstant und verlässlich ist.

So ist beim erfindungsgemässen Vorgehen keine Interaktion (lediglich eine Kommunikation) zwischen den Funktionseinheiten des Systems erforderlich, und jede der Funktionseinheiten des Systems kann nach einem genau vorgegebenen Schema seine Tätigkeit abspulen. Insbesondere dauert dann jede Richtungsbestimmung prinzipiell genau gleich lang und sie stellt verlässlich, robust und im Wesentlichen unabhängig von äusseren Einflüssen die bestimmte Richtung mit gleich bleibendem und genau systembedingt bekanntem Maximalabweichungsfehler (auch bei Alterung des Geräts, etc.) bereit.

Des Weiteren kann erfindungsgemäss faktisch nun auf eine Echtzeitauswertung verzichtet werden, bei welcher das erzielbare Ergebnis davon abhängt, wie präzise einzelne Ereignissen in zeitliche Beziehung zueinander gebracht werden können (siehe z.B. die Methode wie eingangs unter Punkt 1) beschrieben). Eine zeitinformationshinterlegte Erfassung von jeweiligen "Strikes" auf dem Receiver ist - je nach Ausführungsform der Erfindung - allenfalls nur dann und höchstens jedoch nur mit solcher zeitlicher Genauigkeit/Korrelation erforderlich, soweit dies für das Zuordnen von den Ausgangssignalen der erfassten Ausgangssignal-Folge zu den entsprechenden Drehruchgängen der Reihe von vorgegebenen Drehdurchgängen vonnöten ist. Rein beispielhaft wäre also bei einer Umdrehungsgeschwindigkeit von 10 Umdrehungen pro Sekunde für solche Ausführungsformen der Erfindung, die überhaupt gewissermassen eine Zeitinformationshinterlegung erfordern, eine zeitliche Auflösung von einer Zehntelsekunde ausreichend.

Somit wird erfindungsgemäss also ein hinsichtlich der Funktionalität zur Bestimmung einer Laserreceiver-Richtung verbessertes Konstruktionslasersystems aus Rotationslaser und Laserreceiver bereitgestellt. Ferner kann somit die Funktionalität zur Bestimmung einer Laserreceiver-Richtung auch verbessert in verrauschten/gestörten Umgebungen, robuster, schneller, zuverlässiger und/oder weniger aufwändig für die Umsetzung in der Praxis umgesetzt werden.

Durch die erfindungsgemässe Unabhängigkeit von einer Funkdatenübertragungs-Verzögerung kann die Bestimmung der Laserreceiver-Richtung nun zudem auch über grosse Distanzen zwischen Laserreceiver und Rotationslaser erfolgen.

Gemäss eines Aspekts der Erfindung können die im Speicher gespeicherten Drehwinkelbereiche über einen Umfangbereich von mindestens 180° bezüglich der Drehung des Umlenkmittels definiert sein. Insbesondere können diese jedoch über den vollen Umfang einer Drehung, d.h. über einen Umfangbereich von 360° bezüglich der Drehung des Umlenkmittels, definiert sein.

Dabei können z.B. mindestens 30, insbesondere mindestens 100, im Speziellen mindestens 500, Drehwinkelbereiche über den Umfangbereich definiert sein. Je nach dem, wie viele Drehwinkelbereiche dabei vorgesehen sind, ist unter Berücksichtigung der vorgesehenen Anzahl von unterscheidbaren Zuständen bezüglich des Laserstrahls auch eine entsprechende Anzahl von Codespuren bzw. Länge der Zustandswertefolge (und somit auch eine entsprechende Anzahl von Drehdurchgängen und dabei erfolgenden Durchquerungen der jeweiligen Drehwinkelbereiche) erforderlich.

Stammen die herstellbaren Zustände dabei z.B. aus einer Menge von genau zwei definierten unterschiedlichen diskreten Zuständen bezüglich des Laserstrahls, so sind für die Realisierung von 100 Drehwinkelbereichen mindestens sieben Codespuren (d.h. ein Code aus mindestens sieben Zustandswerten) vonnöten, da dies der kleinsten, die Zahl 100 abdeckenden Zweierpotenz (also Potenz zur Basis 2) entspricht.

Insbesondere können die Drehwinkelbereiche dabei jeweils gleichweit und gleich verteilt und direkt aneinander angrenzend über den Umfangbereich definiert sein.

Gemäss eines weiteren Aspekts der Erfindung können die im Speicher gespeicherten Codes derart definiert sind, dass sich Nachbar-Paare von Zustandswertefolgen von Codes, die jeweils direkt benachbarten Drehwinkelbereichen zugeordnet sind, um jeweils nur einen Wert unterscheiden.

Dies entspricht dem Prinzip, das auch bei Drehschaltern zur Anwendung kommt und kann den Vorteil haben, dass bei fehlerhafter Detektion/Berücksichtigung von einem Zustand (also einer Spur) aus dem Code die Richtungsbestimmung nicht völlig falsch sondern möglicherweise nur um einen direkt benachbarten Drehwinkelbereich verfehlt erfolgt.

Alternativ kann jedoch die Definition bzw. Zuordnung der Codes zu den jeweiligen Drehwinkelbereichen auch zufällig oder nach einem anderen speziellen Zuordnungsmuster erfolgen, wobei wesentlich ist, dass eine eindeutige Zuordnung (und somit eine eindeutige Ableitbarkeit eines entsprechenden Drehwinkelbereichs anhand eines identifizierten Codes) gewährleistet ist (Absolutcodierung).

Wie zuvor erwähnt hängt die benötigte Codespurenanzahl - je nach vorgesehener Menge von unterscheidbaren Zuständen des Laserstrahls - von der gewünschten Winkelauflösung bzw. von der Anzahl von im Code abzudeckenden/bereitzustellenden Drehwinkelbereichen ab. Vorteilhaft sind die im Speicher gespeicherten Codes beispielsweise derart definiert, dass die Zustandswertefolgen jeweils eine Zustandswertefolgen-Gliederanzahl von mindestens fünf Zustandswerten umfassen (d.h. der Code mindestens fünf Spuren aufweist).

Die Steuereinheit kann im einfachen Fall dabei dann in Abhängigkeit der vorgesehenen Anzahl von Codespuren zur derartigen Steuerung der Lasereinheit ausgebildet sein, dass die jeweiligen Abfolgen von Zuständen bei einer anzahlig mit der Zustandswertefolgen-Gliederanzahl (also Codespuren-Anzahl) korrespondierenden Reihe von Drehdurchgängen erzeugt werden.

Im einfachsten Beispiel ist dabei die Codespuren-Anzahl gleich der Drehdurchgangsanzahl von der Reihe von Drehdurchgängen, über die der Code mit dem Laserstrahl abgebildet wird, sodass also - mit anderen Worten - in diesem Beispiel die jeweiligen Abfolgen von Zuständen bei einer Reihe von Drehdurchgängen erzeugt werden, die anzahlig gleich ist mit der Zustandswertefolgen-Gliederanzahl (also der Codespuren-Anzahl).

Alternativ kann jedoch auch jeder Zustand einer vorgegebenen Zustandswertefolge z.B. genau zwei Mal hintereinander bei jeweils zwei Drehdurchgängen (bzw. bei jeweils zwei aufeinander folgenden Durchquerungen des Drehwinkelbereichs) erzeugt werden und letztendlich die Auswertung der erfassten Ausgangssignal-Folge in Kenntnis dieser Tatsache erfolgen (z.B. kann nur jedes zweite Ausgangssignal berücksichtigt werden oder dadurch Redundanz für die Auswertung hergestellt werden). In diesem Beispiel wäre dann Drehdurchgangsanzahl von der Reihe von Drehdurchgängen, über die jeweilige Abfolge von Zuständen bezüglich des Laserstrahls erzeugt wird, doppelt so gross als die Zustandswertefolgen-Gliederanzahl (also die Codespuren-Anzahl).

Gemäss eines weiteren Aspekts der Erfindung können die Codes und Winkelbereiche derart situations- und bedarfsbedingt jeweils einzelfallabhängig definiert werden, dass z.B. je nach zur Verfügung stehender Zeit für eine Messung und je nach Bedarf an Präzision und je nach Bedarf an Ausfallsicherheit ein dementsprechendes Codemuster (d.h. eine den Bedarf möglichst optimiert deckende Anzahl an Winkelbereichen und eine den Bedarf möglichst optimiert deckende Anzahl an Codespuren (also Zustandswerten pro Code) und eine den Bedarf möglichst optimiert deckende Anzahl an Drehdurchgängen, über welche das Codemuster erzeugt wird (sodass ggf. Redundanzen gegeben sind und somit die Fehlertoleranz für einzelne Durchgänge steigt und die Ausfallwahrscheinlichkeit sinkt), zur Anwendung kommt.

Ist z.B. kaum oder keine Zeitlimitation vorhanden, so können eine hohe Anzahl und Auflösung an Winkelbereichen definiert sein und ein Code mit einer hohen Anzahl an Spuren verwendet werden, wobei die Codemuster dann ggf. über eine noch höhere Anzahl an Drehdurchgängen mit Redundanzen erzeugt werden.

Soll beispielsweise eine schnelle (grobe) Messung der Laserreceiver-Richtung erfolgen, so können eine vergleichsweise geringe Anzahl und Auflösung an Winkelbereichen definiert sein und ein Code mit einer vergleichsweise geringen Anzahl an Spuren zur Anwendung kommen, wobei die Codemuster dann über genau einen Drehdurchgang pro Spur erzeugt werden.

Ein erfindungsgemässer Vorteil des situationsbedingt frei konfigurierbaren und insbesondere rekonfigurierbaren Codes ist, dass sich je nach Bedarf die Richtungsmessung hinsichtlich Geschwindigkeit oder Genauigkeit anpassen lässt, ohne dabei hardwareseitig Modifikationen vornehmen zu müssen. Insbesondere können z.B. fünf verschiedene Codierungen vorgespeichert sein, die jeweils hinsichtlich unterschiedlicher Bedürfnisse optimiert sind, und durch einen Benutzer oder eine Anwendung die für den aktuellen Fall am besten passende Codierung ausgewählt werden, sodass die Richtungsbestimmung in unterschiedlichen Modi ausführbar ist (einem Geschwindigkeitsmodus, einem Genauigkeitsmodus, einem Kompromissmodus, etc.).

Gemäss eines weiteren Aspekts der Erfindung können zumindest zwei der zumindest zwei definierten unterschiedlichen diskreten Zustände bezüglich des Laserstrahls gegeben sein durch einen an- bzw. ausgeschalteten Laserstrahl. Alternativ oder zusätzlich können (ggf. weitere) definierte unterschiedliche diskrete Zustände z.B. gegeben sein durch
□ unterschiedliche diskrete Intensitätswerte des Laserstrahls und/oder
□ unterschiedlichen diskrete Modulationsfrequenzen des Laserstrahls.

Wesentlich für die und zugleich Vorteil der Erfindung ist dabei, dass die Zustände diskret sind und sich klar und sprunghaft voneinander unterscheiden, sodass keine - ansonsten fehleranfällige - solche Erfassung vonnöten ist, welche sensitiv ist bezüglich einer kontinuierlichen Variation eines Laserstrahlparameters.

Insbesondere werden dabei derartige unterschiedliche Zustände bzgl. des Laserstrahls gewählt, die Entfernungsunabhängig und einfach und klar in der Erfassung und Auswertung voneinander unterscheidbar sind.

Aus diesem Grund ist der erfindungsgemäss zur Anwendung kommende Code als digitaler Code zu bezeichnen, d.h. es erfolgt keine kontinuierliche Variation eines Strahlparameters, sondern werden diskrete, sich sprunghaft unterscheidende und klar voneinander abweichende Zustände bezüglich des Laserstrahls verwendet.

Beispielsweise können zwei Laserstrahlen unterschiedlicher Wellenlänge verwendet werden (entweder anhand von zwei abwechselnd oder einer überlagernd hinzukommend ein- und ausgeschalteten Laserquellen, die in klar unterscheidbaren Farben emittieren, oder anhand von einer durchstimmbaren Laserdiode, die abwechselnd mit unterschiedlichen Wellenlängen emittiert). Alternativ oder zusätzlich kann der Laserstrahl mit zwei klar voneinander unterscheidbaren diskreten Modulationsfrequenzen ausgesendet werden, etc.

Vorteil der Verwendung von diskreten, diskontinuierlichen und klar unterscheidbaren Zuständen ist dabei die Unabhängigkeit von einer Entfernung vom Laserreceiver zum Rotationslaser, und dass auch bei Alterung oder einer anderweitig bedingten absoluten Verschiebung von dem/n für die Erzeugung der diskreten Zustände variierten Laserstrahlparameter/n diese nach wie vor untereinander eindeutig voneinander unterscheidbar identifizierbar sind (z.B. anhand Kenntnis, dass ein gewisser Zustand mit einem klar höherem Wert von einem Laserstrahlparameter bereitgestellt wird als ein gewisser anderer Zustand, sodass durch erfassungsseitigem/auswerteseitigem Vergleich der Signale untereinander - trotz Absolutwertverschiebung bezüglich dieses Parameters - die Zustände nach wie vor bereitstellbar und erfassungsseitig/auswerteseitig auseinanderhaltbar und eindeutig identifizierbar sind, und somit dadurch die Güte des Ergebnisses der Richtungsbestimmung letztendlich nach wie vor unbeeinflusst bleibt).

Gemäss eines weiteren Aspekts der Erfindung sind die Auswerteeinheit und/oder der Laserreceiver ausgebildet zur Auswertung der - im Rahmen der Ausgangssignal-Folge erfassten - Ausgangssignale hinsichtlich der zumindest zwei definierten unterschiedlichen diskreten Zustände und zur Behaftung der Ausgangssignale mit einer entsprechenden Information (insbesondere dann, wenn das Ausgangssignal selbst nicht ohnehin inhärent den jeweiligen Zustand ableitbar macht bzw. selbst inhärent Auskunft darüber erteilbar macht). Die Auswerteeinheit kann dann ausgebildet sein zur Identifikation der korrespondierenden Zustandswertefolge unter Heranziehung der den jeweiligen Ausgangssignalen anhaftenden Information. Haftet den jeweiligen Ausgangssignalen direkt erzeugungsbedingt (d.h. bei Erzeugung durch den Laserreceiver vermittels dessen Laserstrahl-Detektors) Information hinsichtlich der zumindest zwei definierten unterschiedlichen diskreten Zustände an, so kann die Auswerteeinheit die korrespondierende Zustandswertefolge direkt unter Heranziehung der den jeweiligen Ausgangssignalen direkt anhaftenden Information identifizieren.

In einer Ausführungsform der Erfindung, bei welcher zumindest zwei der zumindest zwei definierten unterschiedlichen diskreten Zustände bezüglich des Laserstrahls gegeben sind durch einen an- bzw. ausgeschalteten Laserstrahl, kann der Laserreceiver ausgebildet sein zur Erzeugung der Ausgangssignale behaftet mit Information bezüglich eines Auftreffzeitpunkts des Laserstrahls auf dem Laserstrahl-Detektor (z.B. können Signale erzeugt werden, die jeweils einen zeitgestempelten "Strike" verkörpern; oder können z.B. auch jeweils verstreichende Zeiträume zwischen jeweils aufeinander folgenden "Strikes" als Signale verkörpert sein). Alternativ oder zusätzlich kann auch die Auswerteeinheit die jeweiligen übertragenen Ausgangssignale mit Information bezüglich eines Empfangzeitpunkts behaften, sodass daraus Information darüber, in welchem der Drehdurchgänge der Reihe von Drehdurchgängen im Drehwinkelbereich, wo sich der Laserreceiver befindet, der Laserstrahl jeweils an oder ausgeschaltet war, erhalten werden kann.

Mit anderen Worten wird durch diesen beispielhaft genannten Massnahmen dafür gesorgt, dass die jeweiligen Ausgangssignale der Ausgangssignal-Folge jeweils mit Zeitinformation behaftet sind, die vom Auftreffen des Laserstrahls auf dem Laserstrahl-Detektor abhängt. Somit kann Auswerteeinheit die zu der erfassten Ausgangssignal-Folge korrespondierende Zustandswertefolge unter Heranziehung der den Ausgangssignalen anhaftenden Zeitinformationen identifizieren.

Gemäss eines weiteren Aspekts der Erfindung verwendet die Auswerteeinheit zur Erfassung von der Ausgangssignal-Folge, zur Identifikation von der Zustandswertefolge und zur Bestimmung der Laserreceiver-Richtung die Kenntnis über die gespeicherten definierten Drehwinkelbereiche und die diesen zugeordneten gespeicherten Codes aus jeweils einer Zustandswertefolge (d.h. dass die Auswerteeinheit auf die gespeicherten Informationen zurückgreift).

D.h., dass das Erfassen von der Ausgangssignal-Folge, das Identifizieren von der Zustandswertefolge und das Bestimmen der Laserreceiver-Richtung auf den im Speicher gespeicherten Informationen (wie den definierten Drehwinkelbereichen und den diesen zugeordneten Codes) basiert.

Insbesondere kann das Erfassen von der Ausgangssignal-Folge, das Identifizieren von der Zustandswertefolge und das Bestimmen der Laserreceiver-Richtung ferner basieren auf
- einem Triggersignal (z.B. zum Starten des Empfangens der Ausgangssignal-Folge),
- der Anzahl von Drehdurchgängen von der Reihe von Drehdurchgängen (z.B. zum Setzen eines Endes der Ausgangssignal-Folge) und/oder
- Kenntnis über eine definierte konstante Drehgeschwindigkeit des Umlenkmittels (z.B. zum Zuordnen von mit Zeitinformation behafteten Folgenmitglieder der Ausgangssignal-Folge zu jeweiligen Drehdurchgängen der Reihe).

Alternativ kann jedoch auch der Code selbst so definiert und gewählt sein, dass anhand der Zustandswertefolge selbst feststellbar ist, dass der Code nun beginnt oder begonnen hat (z.B. dadurch, dass jeder Code in der ersten Spur einen einheitlich speziell festgelegten Zustand aufweist). Ebenso kann auch ein Ende des Codes z.B. anderweitig vorgegeben feststellbar sein anhand der bekannten Codespuranzahl oder wiederum anhand daran, dass jeder Code in der letzten Spur einen einheitlich speziell festgelegten Zustand aufweist.

Eine Zuordnung von Ausgangssignalen der Ausgangssignal-Folge zu jeweiligen Drehdurchgängen der Reihe (bzw. zu jeweiligen Zustandswerten der Zustandswertefolge der Codes) kann auch anhand einer Folgenmitglieder-Reihenfolge bzw. Folgenmitglieder-Nummer/-Stelle erfolgen.

Gemäss eines weiteren Aspekts der Erfindung kann im Speicher für die jeweiligen Drehwinkelbereiche jeweils eine konkrete Richtung, insbesondere die der jeweiligen Drehwinkelbereichs-Halbierenden entsprechende Richtung, hinterlegt sein. Die Auswerteeinheit kann dann die entsprechende Richtung (d.h. die Richtung, die für den Drehwinkelbereich hinterlegt ist, der dem identifizierten Code entspricht) abrufen und diese abgerufene Richtung als die Laserreceiver-Richtung setzen bzw. bestimmen bzw. ausgeben.

Alternativ kann jedoch auch eine andere konkrete Richtung aus dem Drehwinkelbereich hinterlegt sein (z.B. die der linken oder rechten Drehwinkelbereichsgrenze entsprechende Richtung, etc.), die dann als Laserreceiver-Richtung bestimmt und ausgegeben wird.

Für die erfindungsgemässe umlenkmitteldrehungssynchronisierte Steuerung können dabei seitens des Rotationslasers insbesondere Mittel zur Verfügbarmachung von fortlaufender Winkelinformation bezüglich einer jeweils aktuellen Drehstellung des Umlenkmittels vorhanden sein.

Diese Mittel können beispielsweise
- ausgebildet sein als Winkelencoder zur fortlaufenden Messung der jeweils aktuellen Drehstellung des Umlenkmittels
   und/oder
- eine definierte Nullwinkelmarke für eine Drehung des Umlenkmittels und einen Nullwinkelmarkensensor aufweisen, sodass über einen Output des Nullwinkelmarkensensors zusammen mit Kenntnis über eine definierte konstante Drehgeschwindigkeit des Umlenkmittels fortlaufend eine jeweils aktuelle Drehstellung des Umlenkmittels ableitbar ist.

Demnach kann dann dass die umlenkmitteldrehungssynchronisierte Steuerung durch die Steuereinheit basieren auf
- den gespeicherten definierten Drehwinkelbereichen und den diesen zugeordneten gespeicherten Codes aus jeweils einer Zustandswertefolge,
- der verfügbar gemachten fortlaufenden Winkelinformation bezüglich der jeweils aktuellen Drehstellung des Umlenkmittels bzw. der daraus fortlaufend aktuell ableitbaren Kenntnis darüber, in welchem der definierten Drehwinkelbereiche sich das Umlenkmittel hinsichtlich seiner jeweils aktuellen Drehstellung befindet, und
- einer Mitzählung der einzelnen Drehdurchgänge bei Ablauf von der Reihe von Drehdurchgängen des Umlenkmittels, zu welcher Mitzählung die Steuereinheit befähigt ist, und einer damit verbundenen ableitbaren Kenntnis darüber, in welchem Drehdurchgang von der Reihe von Drehdurchgängen sich das Umlenkmittel jeweils aktuell befindet.

Gemäss eines weiteren Aspekts der Erfindung kann der Rotationslaser
- als Self-Levelling-Rotationslaser und insbesondere Dual-Grade-Rotationslaser ausgebildet sein und/oder
- mit einer Grade-Catch-Funktionalität, einer Grade-Lock-Funktionalität, insbesondere mit Tracking-Funktionalität, einer Axis-Alignment-Funktionalität und/oder einer Feldkalibrierfunktionalität für das Self-Levelling (wie eine solche Funktionalität beispielsweise in der unter dem Anwaltsaktenzeichen KAP-52920-EP geführten Europäischen Patentanmeldung des Anmelders Leica Geosystems AG, CH-Heerbrugg, vertreten durch Kaminski Harmann Patentanwälte AG (Zusammenschluss 204), eingereicht am 19. März 2013, beschrieben ist) ausgestattet sein sowie dazu ausgebildet sein, um die bestimmbare Laserreceiver-Richtung im Rahmen zumindest einer der gegebenen Funktionalitäten zu verwenden.

Der Ort bzw. die Stelle, wo die Auswerteeinheit im Rahmen des erfindungsgemässen Systems körperlich untergebracht ist bzw. vorgesehen ist, kann dabei je nach Bedarf/Anforderungen und je nach gewünschtem Design verschieden gewählt sein, wie z.B. im Rotationslaser, im Receiver oder in einer dritten körperlichen Komponente (wie beispielsweise etwa in einer Prozessier- und Steuereinheit auf einer Maschine), oder sogar verteilt über mehrere körperliche Einheiten wie z.B. anteilig verteilt über den Receiver und den Rotationslaser, wobei im Receiver ein erster Teil der Auswertung (etwa eine Vorprozessierung) und im Rotationslaser die Weiterprozessierung und letztendliche Richtungsbestimmung aus den vorprozessierten Daten erfolgt.

Je nach örtlicher Unterbringung der Auswerteeinheit können zudem verschiedene Arten von Kommunikationsmittel mit entsprechenden Kommunikationsschnittstellen vorgesehen sein, die zur Übertragung des Ausgangssignals an die Auswerteeinheit bzw. - falls die Auswerteeinheit körperlich verteilt über mehrere Einheiten ausgebildet und untergebracht ist - zur Übertragung von Daten zwischen den Teilen der Auswerteeinheit dienen. Beispielsweise können Funk-Verbindungen oder andere kabellose oder kabelgebundene Datenverbindungen dafür verwendet werden, wie diese aus dem Stand der Technik hinlänglich bekannt sind.

Ferner betrifft die Erfindung auch einen Rotationslaser zur Verwendung als Teil im zuvor beschriebenen Konstruktionslasersystem. Der Rotationslaser ist dabei entsprechend ausgestattet mit mindestens einer Lasereinheit und einem fortlaufend drehbaren Umlenkmittel, zur Emission eines rotierenden Laserstrahls derart, dass der rotierende Laserstrahl eine Referenzfläche definiert.

Erfindungsgemäss weist der Rotationslaser dabei einen Speicher auf, in dem gespeichert sind
- eine Vielzahl von definierten Drehwinkelbereichen bezüglich einer Drehung des Umlenkmittels und
- ein den jeweiligen Drehwinkelbereichen jeweils eindeutig zugeordneter digitaler Code aus einer Zustandswertefolge, die auf einer definierten Abfolge von Zuständen bezüglich des Laserstrahls basiert, wobei die Zustände aus einer Menge von zumindest zwei definierten unterschiedlichen diskreten Zuständen bezüglich des Laserstrahls stammen.

Ferner weist der Rotationslaser erfindungsgemäss eine Steuereinheit auf zur derartigen umlenkmitteldrehungssynchronisierten Steuerung der Lasereinheit hinsichtlich Erzeugung von den zumindest zwei unterschiedlichen diskreten Zuständen, dass in den jeweiligen Drehwinkelbereichen jeweils die dem jeweiligen Drehwinkelbereich entsprechende Abfolge von Zuständen bezüglich des Laserstrahls über - bei Ablauf von einer Reihe von Drehdurchgängen des Umlenkmittels - nacheinander erfolgende Durchquerungen des jeweiligen Drehwinkelbereichs erzeugt wird.

In einer Weiterbildung, in der rotationslaserseitig eine Laserreceiver-Richtung (in welcher ein Laserreceiver, auf welchen der rotierende Laserstrahl auftrifft, sich aus Sicht des Rotationslasers befindet) bestimmbar ist, ist der Rotationslaser ferner ausgestattet mit einer Kommunikationsschnittstelle zum Empfang von einem laserstrahlauftreffabhängigen Ausgangssignal, das durch einen Laserreceiver, auf welchen der rotierende Laserstrahl auftrifft, erzeugt wurde, und einer Auswerteeinheit zur Bestimmung der Laserreceiver-Richtung, wobei die Auswerteeinheit im Einzelnen dafür ausgebildet ist
- zur Erfassung von einer Ausgangssignal-Folge von nacheinander eintreffenden Ausgangssignalen,
- zur Identifikation von einer zu der Ausgangssignal-Folge korrespondierenden Zustandswertefolge aus den gespeicherten Zustandswertefolgen und
- zur Bestimmung der Laserreceiver-Richtung abhängig von jenem Drehwinkelbereich, welcher dem der identifizierten Zustandswertefolge entsprechenden Code zugeordnet ist.

Die im Rahmen des zuvor beschriebenen Konstruktionslasersystems genannten speziellen Aspekte, Ausführungsformen und Weiterbildungen können dabei ggf. analog ebenso auch auf den Rotationslaser angewendet werden.

Ferner betrifft die Erfindung auch einen Laserreceiver zur Verwendung als Teil im zuvor beschriebenen Konstruktionslasersystem.

Der Laserreceiver ist dabei entsprechend ausgestattet mit mindestens
- einem zumindest sich über einen eindimensionalen Bereich auf dem Laserreceiver erstreckenden Laserstrahl-Detektor, sodass ein Ausgangssignals abhängig von einem Auftreffen des Laserstrahls auf dem Laserstrahl-Detektor, und
- einer Auswerteeinheit zur Bestimmung von einer Laserreceiver-Richtung, in welcher sich der Laserreceiver aus Sicht eines - im Konstruktionslasersystem mit dem Laserreceiver zusammenwirkenden - Rotationslasers befindet. Erfindungsgemäss weist der Laserreceiver dabei einen Speicher auf, in dem gespeichert sind
- eine Vielzahl von definierten Drehwinkelbereichen bezüglich einer Drehung eines Umlenkmittels von dem - im Konstruktionslasersystem mit dem Laserreceiver zusammenwirkenden - Rotationslaser und
- ein den jeweiligen Drehwinkelbereichen jeweils eindeutig zugeordneter digitaler Code aus einer Zustandswertefolge, die auf einer definierten Abfolge von Zuständen bezüglich eines durch den - im Konstruktionslasersystem mit dem Laserreceiver zusammenwirkenden - Rotationslaser emittierbaren Laserstrahls basiert, wobei die Zustände aus einer Menge von zumindest zwei definierten unterschiedlichen diskreten Zuständen bezüglich des Laserstrahls stammen, wobei die Abfolge von Zuständen bezüglich des Laserstrahls über - bei Ablauf von einer Reihe von Drehddurchgängen des Umlenkmittels des Rotationslasers - nacheinander erfolgende Durchquerungen des jeweiligen Drehwinkelbereichs erzeugt wird.

Ferner ist die Auswerteeinheit des Laserreceivers erfindungsgemäss nun ausgebildet
- zur Erfassung von einer Ausgangssignal-Folge von nacheinander erzeugten Ausgangssignalen,
- zur Identifikation von einer zu der Ausgangssignal-Folge korrespondierenden Zustandswertefolge aus den gespeicherten Zustandswertefolgen und
- zur Bestimmung der Laserreceiver-Richtung abhängig von jenem Drehwinkelbereich, welcher dem der identifizierten Zustandswertefolge entsprechenden Code zugeordnet ist.

Die im Rahmen des zuvor beschriebenen Konstruktionslasersystems genannten speziellen Aspekte, Ausführungsformen und Weiterbildungen können dabei gegebenenfalls analog ebenso auch auf den Laserreceiver angewendet werden.

Ferner betrifft die Erfindung auch ein Verfahren zur Laserreceiver-Richtungsbestimmung mit
- einem eine Lasereinheit und ein fortlaufend drehbares Umlenkmittel aufweisenden Rotationslaser zum Emittieren eines rotierenden Laserstrahls derart, dass der rotierende Laserstrahl eine Referenzfläche definiert, und
- einem Laserreceiver mit einem zumindest sich über einen eindimensionalen Bereich auf dem Laserreceiver erstreckenden Laserstrahl-Detektor, sodass der Laserreceiver ausgebildet ist zur Erzeugung eines Ausgangssignals abhängig von einem Auftreffen des Laserstrahls auf dem Laserstrahl-Detektor.

Erfindungsgemäss sind dabei für das Verfahren definiert
- eine Vielzahl von Drehwinkelbereichen bezüglich einer Drehung des Umlenkmittels und
- ein den jeweiligen Drehwinkelbereichen jeweils eindeutig zugeordneter digitaler Code aus einer
   Zustandswertefolge, die auf einer definierten Abfolge von Zuständen bezüglich des Laserstrahls basiert, wobei die Zustände aus einer Menge von zumindest zwei definierten unterschiedlichen diskreten Zuständen bezüglich des Laserstrahls stammen.

Ferner erfolgen im Rahmen des Verfahrens erfindungsgemäss
- ein derart umlenkmitteldrehungssynchronisiertes Steuern des Emittierens des Laserstrahls hinsichtlich der zumindest zwei unterschiedlichen diskreten Zustände, dass in den jeweiligen Drehwinkelbereichen jeweils die dem jeweiligen Drehwinkelbereich entsprechende Abfolge von Zuständen bezüglich des Laserstrahls über - bei Ablauf von einer Reihe von Drehdurchgängen des Umlenkmittels - nacheinander erfolgende Durchquerungen des jeweiligen Drehwinkelbereichs erzeugt wird,
- ein Erfassen von einer Ausgangssignal-Folge von nacheinander eintreffenden Ausgangssignalen,
- ein Identifizieren von einer zu der Ausgangssignal-Folge korrespondierenden Zustandswertefolge aus den gespeicherten Zustandswertefolgen und
- ein Bestimmen von einer Laserreceiver-Richtung, in welcher sich der Laserreceiver aus Sicht des Rotationslasers befindet, abhängig von jenem Drehwinkelbereich, welcher dem der identifizierten Zustandswertefolge entsprechenden Code zugeordnet ist.

Die im Rahmen des zuvor beschriebenen Konstruktionslasersystems genannten speziellen Aspekte, Ausführungsformen und Weiterbildungen können dabei analog ebenso auch auf dieses Verfahren angewendet werden.

Ferner betrifft die Erfindung auch ein Computerprogrammprodukt mit Programmcode, der auf einem maschinenlesbaren Träger gespeichert ist und erfindungsgemäss einen derartigen Programmcode enthält, dass es zur Durchführung des oben beschriebenen Verfahrens ausgebildet ist, insbesondere wenn das Programm auf einer elektronischen Datenverarbeitungseinheit ausgeführt wird, im Speziellen wobei die elektronische Datenverarbeitungseinheit als Steuer- und Auswerteeinheit des zuvor beschriebenen Konstruktionslasersystems, als Steuer- und ggf. Auswerteeinheit des zuvor beschrieben Rotationslasers oder als Auswerteeinheit des zuvor beschrieben Laserreceivers dient.

Die im Rahmen des zuvor beschriebenen Konstruktionslasersystems genannten speziellen Aspekte, Ausführungsformen und Weiterbildungen können dabei analog ebenso auch auf dieses Computerprogrammprodukt angewendet werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figur 1: ein schemenhaftes Ausführungsbeispiel für ein erfindungsgemässes Konstruktionslasersystem;
- Figur 2: eine Illustration zur Erläuterung der erfindungsgemässen Codierung;
- Figur 3: eine Illustration zur Erläuterung eines Beispiels für den Aufbau der Steuerung für die Lasereinheit (d.h. eine Illustration zur beispielhaften Erläuterung des Lasermuster-Encoder-Prinzips);
- Figur 4: eine Illustration dafür, welche Funktion der Laserreceiver im Rahmen des Konstruktionslasersystems beispielhaft einnehmen kann; und
- Figur 5: eine Illustration zur Erläuterung eines Beispiels für den Aufbau der Auswerteeinheit (d.h. eine Illustration zur beispielhaften Erläuterung des Lasermuster-Decoder-Prinzips).

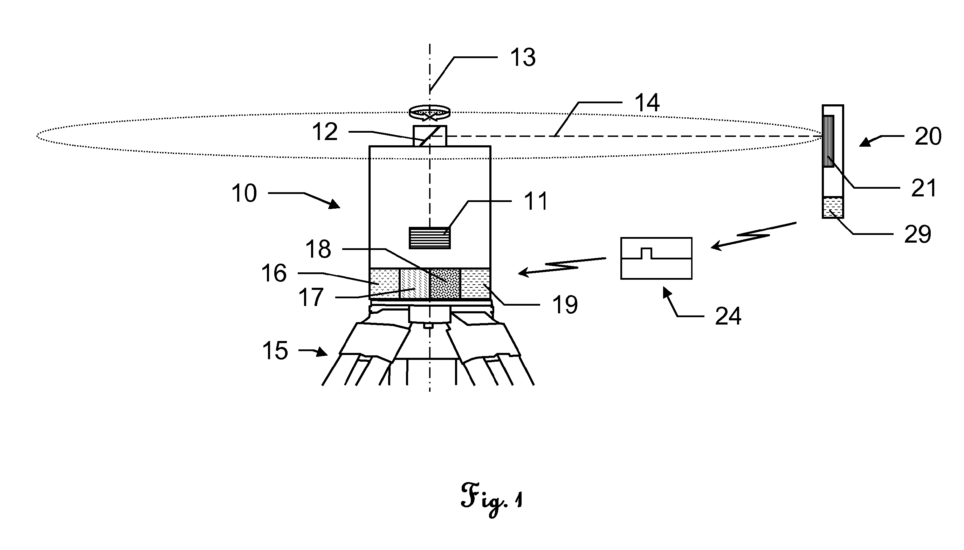

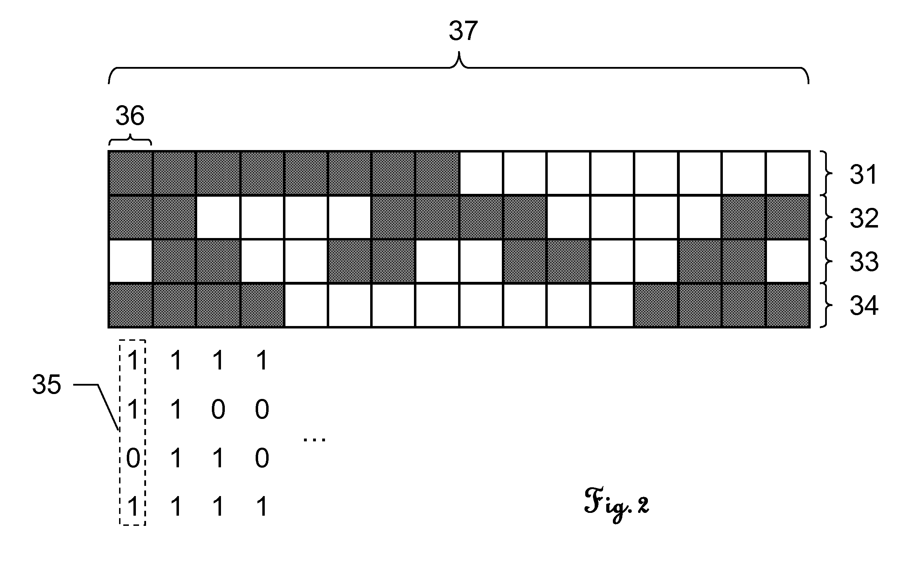

Figur 1 zeigt ein Ausführungsbeispiel für ein erfindungsgemässes Konstruktionslasersystem mit einem eine Lasereinheit 11 und ein drehbares Umlenkmittel 12 aufweisenden Rotationslaser 10 zur Emission eines rotierenden Laserstrahls 14, wobei der rotierende Laserstrahl eine Referenzfläche definiert, und einen Laserempfänger 20 mit einem zumindest sich über einen eindimensionalen Bereich auf dem Laserreceiver erstreckenden Laserstrahl-Detektor 21, der ausgebildet ist zur Erzeugung eines Ausgangssignals 24 abhängig von einem Auftreffen des Laserstrahls auf dem Laserstrahl-Detektor. Zudem ist eine Auswerteeinheit 16 vorgesehen zur Bestimmung von einer Laserreceiver-Richtung, in welcher sich der Laserreceiver 20 aus Sicht des Rotationslasers 10 befindet. Erfindungsgemäss wird - wie dies näher in Figur 2 illustriert ist - zur Bestimmung der Laserreceiver-Richtung nun ein drehwinkelbereichsabhängiges digitales mehrspuriges Codemuster verwendet wird.

Dafür sind erfindungsgemäss in einem Speicher 17 Informationen gespeichert über
- eine Vielzahl von definierten Drehwinkelbereichen bezüglich einer Drehung des Umlenkmittels 12 und
- einen den jeweiligen Drehwinkelbereichen jeweils eindeutig zugeordneter digitaler Code aus einer Zustandswertefolge, die auf einer definierten Abfolge von Zuständen bezüglich des Laserstrahls 14 basiert, wobei die Zustände aus einer Menge von zumindest zwei definierten unterschiedlichen diskreten Zuständen bezüglich des Laserstrahls 14 stammen.

Ferner ist nun eine Steuereinheit 18 vorhanden zur derartigen umlenkmitteldrehungssynchronisierten Steuerung der Lasereinheit 11 hinsichtlich Erzeugung von den zumindest zwei unterschiedlichen diskreten Zuständen, dass in den jeweiligen Drehwinkelbereichen jeweils die dem jeweiligen Drehwinkelbereich entsprechende Abfolge von Zuständen bezüglich des Laserstrahls 14 über - bei Ablauf von einer Reihe von Drehdurchgängen des Umlenkmittels 12 - nacheinander erfolgende Durchquerungen des jeweiligen Drehwinkelbereichs erzeugt wird.

Auswerteeinheitsseitig kann schliesslich eine Ausgangssignal-Folge von nacheinander eintreffenden Ausgangssignalen 24 erfasst werden, eine zu der Ausgangssignal-Folge korrespondierende Zustandswertefolge aus den gespeicherten Zustandswertefolgen identifiziert werden und die Laserreceiver-Richtung bestimmt werden abhängig von jenem Drehwinkelbereich, welcher dem der identifizierten Zustandswertefolge entsprechenden Code zugeordnet ist.

In dieser Ausführungsform bezüglich räumlicher Unterbringung der Auswerteeinheit 16, des Speichers 17 und der Steuereinheit 18 können kabbellose Kommunikationsmittel mit einer rotationslaserseitigen, zumindest datenempfangenden Kommunikationsschnittstelle 19 und einer laserreceiverseitigen, zumindest datensendenden Kommunikationsschnittstelle 29 (insbesondere jeweils Funk-Module) vorgesehen sein, die zur Übertragung des Ausgangssignals 24 an die Auswerteeinheit 19 dienen.

Im Speziellen wird damit auf einfache Weise die Laserreceiver-Richtungsbestimmung ermöglicht, ohne dass dafür eine vordefinierte und Modularität verunmöglichende hardwareseitige Abstimmung diverser Bauteile der beiden zusammenwirkenden Geräte aufeinander erforderlich ist (z.B. hinsichtlich der Wellenlänge oder der Modulationsweise des Laserstrahls mit entsprechender hardwareseitiger Auslegung der senderseitigen Laserquelle bzw. des empfängerseitigen Laserstrahl-Detektors) und ohne dass dafür überhaupt eine dedizierte Spezialausbildung des Laserreceivers unbedingt erforderlich ist (und die Funktionalität somit Laserreceiver-geräteausführungsunabhängig sein kann). Zudem kann eine Laserreceiver-Richtungsbestimmung auch parallel für zwei oder mehrere Laserreceiver erfolgen.

Für den hier auf einem Stativ 15 aufgestellten Rotationslaser 10 sind dabei im Einzelnen unterschiedliche Ausführungsformen von Laserquellen für die Lasereinheit 11, insbesondere Diodenlaser, aus dem Stand der Technik bekannt. Die durch die Lasereinheit 11 emittierte Laserstrahlung trifft in ihrem Strahlengang auf eine Laserstrahlungsumlenkeinheit 12, die den Laserstrahl im gezeigten Beispiel um 90° umlenkt. Die Laserstrahlungsumlenkeinheit 12 ist beispielsweise als ein um 45° zur eintreffenden Laserstrahlung verkippter Spiegel, vorzugsweise jedoch als ein Pentaprisma bzw. Pentaspiegel, der unabhängig vom Einfallswinkel stets die Laserstrahlung um 90° umlenkt, ausgebildet. Die Laserstrahlungsumlenkeinheit 12 steht in einer derartigen Winkverbindung mit einer Rotationsbewirkungseinheit, so dass die Laserstrahlungsumlenkeinheit 12 um eine Rotationsachse 13 motorisch antreibbar rotiert. Die Rotationseinheit ist beispielsweise als eine kugelgelagerte, den Strahlengang der Laserstrahlung umgebende Hülse, die über einen Riemenantrieb von einem Elektromotor angetrieben wird, ausgebildet. Somit erfolgt die Emission einer Laserstrahlung 14 in eine rotierende Emissionsrichtung α, so dass die dargestellte Quasilaserebene erzeugt wird. Als Rotationszentrum wird der Schnittpunkt dieser Quasilaserebene mit der Rotationsachse 13 definiert. Das Rotationszentrum kann von einem transparenten Austrittsfenster derart umgeben sein, dass die Laserstrahlung durch das Austrittsfenster nach aussen gelangt. An der Rotationseinheit 3 können indirekt Mmittel z.B. in Form eines Winkeldetektors angeordnet sein, die ein Erfassen der jeweils aktuellen Winkelausrichtung der Laserstrahlungsumlenkeinheit 12 (d.h. eine Winkelinformation bezüglich einer jeweils aktuellen Drehstellung des Umlenkmittels 12) und somit der jeweiligen Emissionsrichtung α der Laserstrahlung 5 ermöglichen.

Der Laserstrahl-Detektor 21 des Laserreceivers 20 kann dabei ferner - wie aus dem Stand der Technik bekannt - so ausgebildet sein, dass zudem eine Auftreffposition des Laserstrahls auf der Laserstrahl-Detektor-Linie bzw. -Fläche abgeleitet werden kann, wofür die photosensitiven Elemente - betrachtet in aufrechter Betriebsstellung des Geräts - in einer vertikal ausgerichteten Sensorzeile aneinander gereiht sein können, sodass sich also der Laserstrahl-Detektor 21 zumindest über eine vertikale Linie (als eindimensionaler Bereich) auf dem Laserreceiver 20 erstreckt. Zudem kann im Laserreceiver 20 auch eine eigene Auswerteeinheit etwa zur Ermittlung der Position des Laserempfängers relativ zur durch den rotierenden Laserstrahl definierten Referenzhöhe anhand des Outputs des Laserstrahl-Detektors 20 sowie ein Indikator für die ermittelte Position (etwa eine visuelle Anzeige), insbesondere ausgebildet zur Indikation, ob der Laserempfänger 20 mit der Referenzfläche exakt koinzidiert, in das Laserempfängergerät integriert sein. Die Position kann dabei beispielsweise z.B. als Mittelpunkt jenes Bereichs auf der Laserstrahl-Detektor-Zeile, welcher durch den Laserstrahl beleuchtet wird, ermittelt werden.

Figur 2 zeigt eine Illustration zur Erläuterung der erfindungsgemässen drehwinkelbereichsabhängigen digitalen mehrspurigen absoluten Codierung.

Die mehreren Spuren werden hier durch eine Reihe von mehreren Drehdurchgängen 31-34 erzeugt und abgebildet, und dabei im jeweiligen Drehdurchgang das der zugehörigen Spur entsprechende Winkelbereichsmuster über Modifikation des Laserstrahls (wie z.B. An- und Ausschaltung) erzeugt.

Den jeweiligen Drehwinkelbereichen 36 ist dafür jeweils ein digitaler Code 35 aus einer viergliedrigen Zustandswertefolge (was vier Codespuren entspricht) eindeutig zugeordnet, die auf einer definierten Abfolge von Zuständen bezüglich des Laserstrahls basiert, wobei die Zustände aus einer Menge von hier zwei definierten unterschiedlichen diskreten Zuständen bezüglich des Laserstrahls stammen (z.B. ein eingeschalteter Laserstrahl [im Muster weiss bzw. unausgefüllt dargestellt] und ein ausgeschalteter Laserstrahl [dunkel schraffiert dargestellt]).

Die Drehwinkelbereiche 36 sind hier über den figurativ ausgewalzten bzw. plan dargestellten Umfangbereich 38 bezüglich einer Drehung des Umlenkmittels definiert.

Bei der hier verwendeten Menge von zwei Zuständen und vier Spuren können 16 eindeutige Codes erzeugt werden (zwei hoch 4). Jedem der 16 definierten Winkelbereiche ist einer der 16 Codes eindeutig zugeordnet.

Ferner sind im gezeigten Beispiel die Codes derart definiert, dass sich Nachbar-Paare von Zustandswertefolgen der Codes, die jeweils direkt benachbarten Drehwinkelbereichen zugeordnet sind, in jeweils nur einem Glied (d.h. um jeweils nur einen Zustandswert) unterscheiden.

Zudem sind hier die Drehwinkelbereiche dabei jeweils gleichweit und gleich verteilt und direkt aneinander angrenzend über den Umfangbereich 38 definiert.

Receiverseitig kann nun pro Auftreffen des Laserstrahls (also pro "Strike") ein Signal erzeugt und an die Auswerteeinheit gesendet werden. Dort kann anhand einer Verarbeitung der Folge von eingegangenen Signalen - in Kenntnis des mehrspurigen Codemuster - der entsprechende Drehwinkelbereich, in welchem sich der Receiver wohl befinden muss, abgeleitet und somit die gesuchte Laserreceiver-Richtung bestimmt werden.

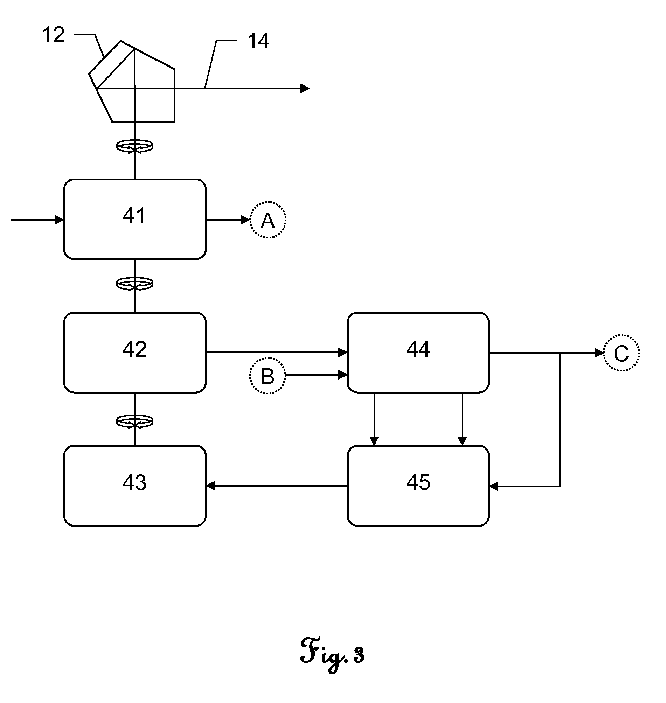

Figur 3 zeigt eine Illustration zur Erläuterung eines Beispiels für den Aufbau der Steuerung für die Lasereinheit (d.h. eine Illustration zur beispielhaften Erläuterung des Lasermuster-Encoder-Prinzips).

Das rotierende Pentaprisma als Umlenkmittel 12, mit bekannter Drehgeschwindigkeit A angetrieben durch den Elektromotor 41, ist mechanisch gekoppelt mit einem Drehgeber 42 (insbesondere Drehwinkelgeber). Der durch die Lasereinheit emittierte und durch das Pentaprisma austretende Laserstrahl 14 kann gesteuert werden durch einen Lasertreiber 43 (der Teil der Steuereinheit ist). Der Drehgeber 42 stellt Information bereit über die aktuelle Drehwinkelstellung des Pentaprismas.

Eine Zustandsmaschine 44 als Teil der Steuereinheit umfasst einen Drehdurchgangszähler und einen Eingang für ein externes Trigger-Signal B (zum Starten des Erzeugens der Abfolge von Zuständen über - bei Ablauf der Reihe von Drehdurchgängen - nacheinander erfolgende Durchquerungen der jeweiligen Drehwinkelbereiche) um die folgenden Signale zu generieren:
- Signal C zu Starten der Codemusteraussendung,
- Signal zum aktuellen Winkelbereich, in dem sich das Pentaprisma befindet, und
- Signal zum aktuellen Drehdurchgang.

In der Look-Up-Tabelle 45 sind dabei die Codes hinterlegt. Diese Look-Up-Tabelle 45 generiert nun ein EIN/AUS-Signal für den Lasertreiber 43 abhängig von den zuvor genannten Signalen aus der Zustandsmaschine 44. Der AN/AUS-Zustand bezüglich des Laserstrahls kann dabei individuell definiert sein für die jeweiligen Winkelbereiche und die jeweiligen Drehdurchgänge nach Applizieren des Trigger-Signals B.

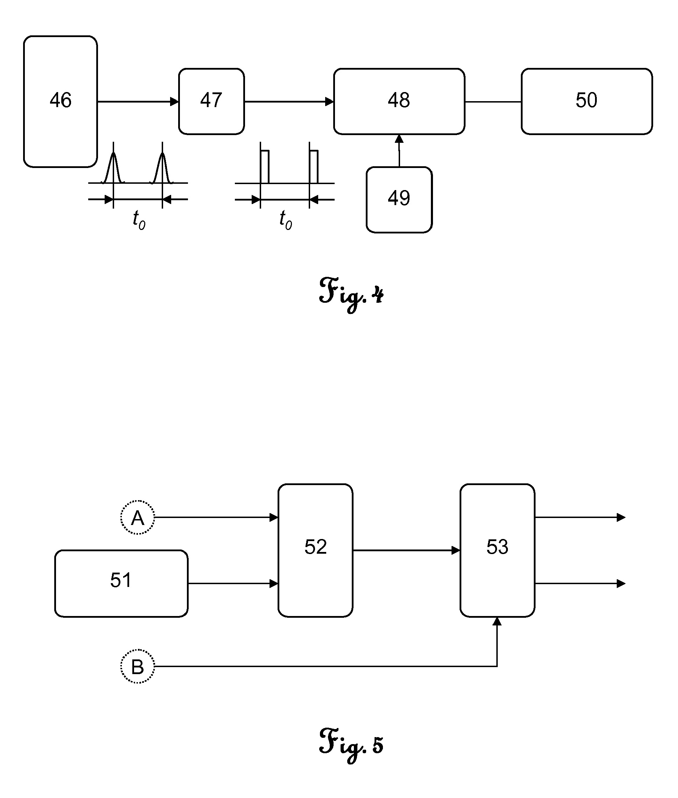

Figur 4 zeigt eine Illustration dafür, welche Funktion der Laserreceiver im Rahmen des Konstruktionslasersystems rein beispielhaft einnehmen kann.

Der Laserreceiver ist dabei ausgebildet zur Messung der Zeit t0 zwischen zwei aufeinander folgenden "Strikes" durch den Laserstrahl auf dem Laserstrahl-Detektor 46, wofür das Roh-Output-Signal des Laserstrahl-Detektors 46 durch einen Trigger 47 und einen Zählschaltkreis 48 durchgeleitet wird. Die Zeit t0 wird via receiverinternem Funkmodul 50 an den Rotationslaser übermittelt, als Vielfaches von einer Grundzeiteinheit (z.B. von 1 ms).

Figur 5 zeigt eine Illustration zur Erläuterung eines Beispiels für den Aufbau der Auswerteeinheit (d.h. eine Illustration zur beispielhaften Erläuterung des Lasermuster-Decoder-Prinzips).

Das Funkmodul 51 des Rotationslasers empfängt und erfasst die Folge von "Strike"-Zeitintervallen vom Laserreceiver. Der Symbolgenerator 52 rechnet zurück auf die jeweiligen Zustände anhand von der erfassten Folge von "Strike"-Zeitintervallen und anhand von der bekannten Drehgeschwindigkeit A. Ein Symbol ist dabei ein diskreter Wert als Vielfaches eines Drehdurchgangs wie folgt:
Symbol A: zwischen zwei "Strikes" ist ein Drehdurchgang
Symbol B: zwischen zwei "Strikes" sind zwei Drehdurchgänge
Symbol C: zwischen zwei "Strikes" sind drei Drehdurchgänge usw.

Die so erstellte Sequenz von Symbolen für einen Drehwinkelbereich ist unabhängig von der Umdrehungsdauer des Umlenkmittels. Der Decoder 53 konvertiert die Sequenz von Symbolen in eine gültige, korrespondierende Code-Nummer (die dem Winkelbereich zugeordnet ist, in welchem sich demnach der Laserreceiver befindet).

Erfindungsgemäss ist somit keine Echtzeitkommunikation zwischen Laserreceiver und Rotationslaser zwingend erforderlich.

Bei der Erfindung kann hingegen die Übertragungszeit für die Funk-Kommunikation unbekannt sein, da die Lasermuster-Encodierung unabhängig und bei Bedarf asynchron erfolgen kann von der Dekodierung der gesuchten Richtung.

Ferner ist seitens des Laserreceivers keine Vorkenntnis über die verwendeten Codes erforderlich.

## Patentansprüche

1. Konstruktionslasersystem mit mindestens
• einem eine Lasereinheit und ein fortlaufend drehbares Umlenkmittel aufweisenden Rotationslaser zur Emission eines rotierenden Laserstrahls derart, dass der rotierende Laserstrahl eine Referenzfläche definiert,
• einem Laserreceiver mit einem zumindest sich über einen eindimensionalen Bereich auf dem Laserreceiver erstreckenden Laserstrahl-Detektor, sodass der Laserreceiver ausgebildet ist zur Erzeugung eines Ausgangssignals abhängig von einem Auftreffen des Laserstrahls auf dem Laserstrahl-Detektor,
• einer Auswerteeinheit zur Bestimmung von einer Laserreceiver-Richtung, in welcher sich der Laserreceiver aus Sicht des Rotationslasers befindet,
• einem Speicher, in dem gespeichert sind
□ eine Vielzahl von definierten Drehwinkelbereichen bezüglich einer Drehung des Umlenkmittels und
□ ein den jeweiligen Drehwinkelbereichen jeweils eindeutig zugeordneter digitaler Code aus einer Zustandswertefolge, die auf einer definierten Abfolge von Zuständen bezüglich des Laserstrahls basiert, wobei die Zustände aus einer Menge von zumindest zwei definierten unterschiedlichen diskreten Zuständen bezüglich des Laserstrahls stammen,
und
• einer Steuereinheit zur Steuerung der Lasereinheit zur Erzeugung von den zumindest zwei unterschiedlichen diskreten Zuständen, derart, dass in den jeweiligen Drehwinkelbereichen jeweils die dem jeweiligen Drehwinkelbereich entsprechende Abfolge von Zuständen bezüglich des Laserstrahls erzeugt wird,
• wobei die Auswerteeinheit ausgebildet ist
□ zur Erfassung von einer Ausgangssignal-Folge von nacheinander erzeugten Ausgangssignalen,
□ zur Identifikation von einer zu der Ausgangssignal-Folge korrespondierenden Zustandswertefolge aus den gespeicherten Zustandswertefolgen und
□ zur Bestimmung der Laserreceiver-Richtung abhängig von jenem Drehwinkelbereich, welcher dem der identifizierten Zustandswertefolge entsprechenden Code zugeordnet ist,
**dadurch gekennzeichnet, dass**
die Steuerung der Lasereinheit umlenkmitteldrehungssynchron erfolgt, derart, dass die Abfolge von Zuständen bezüglich des Laserstrahls über - bei Ablauf von einer Reihe von Drehdurchgängen des Umlenkmittels - nacheinander erfolgende Durchquerungen des jeweiligen Drehwinkelbereichs erzeugt wird.

2. Konstruktionslasersystem nach Anspruch 1,
**dadurch gekennzeichnet, dass**
die im Speicher gespeicherten Drehwinkelbereiche über einen Umfangbereich von mindestens 180°, insbesondere über 360°, bezüglich einer Drehung des Umlenkmittels definiert sind,
insbesondere wobei mindestens 30, insbesondere mindestens 100, im Speziellen mindestens 500, jeweils gleichweite Drehwinkelbereiche über den Umfangbereich definiert sind.

3. Konstruktionslasersystem nach Anspruch 1 oder 2,
**dadurch gekennzeichnet, dass**
die im Speicher gespeicherten Codes derart definiert sind, dass sich Nachbar-Paare von Zustandswertefolgen von Codes, die jeweils direkt benachbarten Drehwinkelbereichen zugeordnet sind, um jeweils nur einen Wert unterscheiden.

4. Konstruktionslasersystem nach einem der vorangehenden Ansprüche,
**dadurch gekennzeichnet, dass**
• die im Speicher gespeicherten Codes derart definiert sind, dass die Zustandswertefolgen jeweils eine Zustandswertefolgen-Gliederanzahl von mindestens fünf Zustandswerten umfassen, insbesondere wobei die Steuereinheit zur derartigen Steuerung der Lasereinheit ausgebildet ist, dass die jeweiligen Abfolgen von Zuständen bei einer anzahlig mit der Zustandswertefolgen-Gliederanzahl korrespondierenden, insbesondere gleichanzahligen, Reihe von Drehdurchgängen erzeugt werden, und/oder
• die Zustände aus einer Menge von genau zwei definierten unterschiedlichen diskreten Zuständen bezüglich des Laserstrahls stammen.

5. Konstruktionslasersystem nach einem der vorangehenden Ansprüche,
**dadurch gekennzeichnet, dass**
• zumindest zwei der zumindest zwei definierten unterschiedlichen diskreten Zustände bezüglich des Laserstrahls gegeben sind durch einen an- bzw. ausgeschalteten Laserstrahl und/oder
• sich die zumindest zwei definierten unterschiedlichen diskreten Zustände unterscheiden in
□ unterschiedlichen diskreten Intensitätswerten des Laserstrahls und/oder
□ unterschiedlichen diskreten Modulationsfrequenzen des Laserstrahls.

6. Konstruktionslasersystem nach einem der vorangehenden Ansprüche,
**dadurch gekennzeichnet, dass**
• die Auswerteeinheit und/oder der Laserreceiver ausgebildet sind zur Auswertung der - im Rahmen der Ausgangssignal-Folge erfassten - Ausgangssignale hinsichtlich der zumindest zwei definierten unterschiedlichen diskreten Zustände und zur Behaftung der Ausgangssignale mit einer entsprechenden Information und
• die Auswerteeinheit ausgebildet ist zur Identifikation der korrespondierenden Zustandswertefolge unter Heranziehung der den jeweiligen Ausgangssignalen anhaftenden Information.

7. Konstruktionslasersystem nach einem der vorangehenden Ansprüche, wobei zumindest zwei der zumindest zwei definierten unterschiedlichen diskreten Zustände bezüglich des Laserstrahls gegeben sind durch einen an- bzw. ausgeschalteten Laserstrahl,
**dadurch gekennzeichnet, dass**
• der Laserreceiver ausgebildet ist zur Erzeugung des Ausgangssignals behaftet mit Information bezüglich eines Auftreffzeitpunkts des Laserstrahls auf dem Laserstrahl-Detektor und/oder
• die Auswerteeinheit ausgebildet ist zur Behaftung der jeweiligen übertragenen Ausgangssignale mit Information bezüglich eines Empfangzeitpunkts, sodass die jeweiligen Ausgangssignale der Ausgangssignal-Folge jeweils mit Zeitinformation behaftet sind, die vom Auftreffen des Laserstrahls auf dem Laserstrahl-Detektor abhängt,
und dadurch, dass somit durch die Auswerteeinheit die zu der erfassten Ausgangssignal-Folge korrespondierende Zustandswertefolge unter Heranziehung der den Ausgangssignalen der erfassten Ausgangssignal-Folge anhaftenden Zeitinformationen identifizierbar ist.

8. Konstruktionslasersystem nach einem der vorangehenden Ansprüche,
**dadurch gekennzeichnet, dass**
die Auswerteeinheit zur Erfassung von der Ausgangssignal-Folge, zur Identifikation von der Zustandswertefolge und zur Bestimmung der Laserreceiver-Richtung ausgebildet ist basierend auf
• den gespeicherten definierten Drehwinkelbereichen und den diesen zugeordneten gespeicherten Codes aus jeweils einer Zustandswertefolge,
sowie insbesondere auf
• einem Triggersignal,
• der Anzahl von Drehdurchgängen von der Reihe von Drehdurchgängen und/oder
• Kenntnis über eine definierte konstante Drehgeschwindigkeit des Umlenkmittels.

9. Konstruktionslasersystem nach einem der vorangehenden Ansprüche,
**dadurch gekennzeichnet, dass**
im Speicher für die jeweiligen Drehwinkelbereiche jeweils eine konkrete Richtung, insbesondere die der jeweiligen Drehwinkelbereichs-Halbierenden entsprechende Richtung, hinterlegt ist, und die Auswerteeinheit ausgebildet ist zur Abrufung der zu jenem Drehwinkelbereich hinterlegten Richtung, der dem der identifizierten Zustandswertefolge entsprechenden Code zugeordnet ist, und diese abgerufene Richtung als die Laserreceiver-Richtung bestimmbar und ausgebbar ist.

10. Konstruktionslasersystem nach einem der vorangehenden Ansprüche,
**dadurch gekennzeichnet, dass**
seitens des Rotationslasers Mittel zur Verfügbarmachung von fortlaufender Winkelinformation bezüglich einer jeweils aktuellen Drehstellung des Umlenkmittels vorhanden sind
• mit einem Winkelencoder zur fortlaufenden Messung der jeweils aktuellen Drehstellung des Umlenkmittels oder
• mit einer definierten Nullwinkelmarke für eine Drehung des Umlenkmittels und einem Nullwinkelmarkensensor, sodass über einen Output des Nullwinkelmarkensensors zusammen mit Kenntnis über eine definierte konstante Drehgeschwindigkeit des Umlenkmittels fortlaufend eine jeweils aktuelle Drehstellung des Umlenkmittels ableitbar ist,
und dass die umlenkmitteldrehungssynchronisierte Steuerung durch die Steuereinheit basiert auf
• den gespeicherten definierten Drehwinkelbereichen und den diesen zugeordneten gespeicherten Codes aus jeweils einer Zustandswertefolge,
• der verfügbar gemachten fortlaufenden Winkelinformation bezüglich der jeweils aktuellen Drehstellung des Umlenkmittels bzw. der daraus fortlaufend aktuell ableitbaren Kenntnis darüber, in welchem der definierten Drehwinkelbereiche sich das Umlenkmittel hinsichtlich seiner jeweils aktuellen Drehstellung befindet, und
• einer Mitzählung der einzelnen Drehdurchgänge bei Ablauf von der Reihe von Drehdurchgängen des Umlenkmittels, zu welcher Mitzählung die Steuereinheit befähigt ist, und einer damit verbundenen ableitbaren Kenntnis darüber, in welchem Drehdurchgang von der Reihe von Drehdurchgängen sich das Umlenkmittel jeweils aktuell befindet.

11. Konstruktionslasersystem nach einem der vorangehenden Ansprüche,
**dadurch gekennzeichnet, dass**
der Rotationslaser
• als Self-Levelling-Rotationslaser und insbesondere Dual-Grade-Rotationslaser ausgebildet ist und/oder
• mit einer der folgenden weiteren Funktionalitäten ausgestattet ist:
□ Grade-Catch,
□ Grade-Lock, insbesondere mit Tracking,
□ Axis-Alignment und/oder
□ Feldkalibrierfunktionalität für das Self-Levelling sowie dazu ausgebildet ist, die bestimmbare Laserreceiver-Richtung im Rahmen zumindest einer der gegebenen Funktionalitäten zu verwenden.

12. Rotationslaser zur Verwendung als Teil eines Konstruktionslasersystems nach einem der vorangehenden Ansprüche, mit mindestens einer Lasereinheit und einem fortlaufend drehbaren Umlenkmittel, zur Emission eines rotierenden Laserstrahls derart, dass der rotierende Laserstrahl eine Referenzfläche definiert, mit einem Speicher, in dem gespeichert sind
• eine Vielzahl von definierten Drehwinkelbereichen bezüglich einer Drehung des Umlenkmittels und
• ein den jeweiligen Drehwinkelbereichen jeweils eindeutig zugeordneter digitaler Code aus einer Zustandswertefolge, die auf einer definierten Abfolge von Zuständen bezüglich des Laserstrahls basiert, wobei die Zustände aus einer Menge von zumindest zwei definierten unterschiedlichen diskreten Zuständen bezüglich des Laserstrahls stammen, und mit einer Steuereinheit zur Steuerung der Lasereinheit zur Erzeugung von den zumindest zwei unterschiedlichen diskreten Zuständen, derart, dass in den jeweiligen Drehwinkelbereichen jeweils die dem jeweiligen Drehwinkelbereich entsprechende Abfolge von Zuständen bezüglich des Laserstrahls erzeugt wird, **dadurch gekennzeichnet, dass** die Steuerung der Lasereinheit umlenkmitteldrehungssynchron erfolgt, derart, dass die Abfolge von Zuständen bezüglich des Laserstrahls über - bei Ablauf von einer Reihe von Drehddurchgängen des Umlenkmittels - nacheinander erfolgende Durchquerungen des jeweiligen Drehwinkelbereichs erzeugt wird, insbesondere wobei der Rotationslaser ferner aufweist
• eine Kommunikationsschnittstelle zum Empfang von einem - durch einen Laserreceiver, auf welchen der rotierende Laserstrahl auftrifft, erzeugbaren - laserstrahlauftreffabhängigen Ausgangssignal, und
• eine Auswerteeinheit zur Bestimmung von einer Laserreceiver-Richtung, in welcher ein Laserreceiver, auf welchen der rotierende Laserstrahl auftrifft, sich aus Sicht des Rotationslasers befindet, die dafür ausgebildet ist
□ zur Erfassung von einer Ausgangssignal-Folge von nacheinander über die Kommunikationsschnittstelle eintreffenden Ausgangssignalen,
□ zur Identifikation von einer zu der Ausgangssignal-Folge korrespondierenden Zustandswertefolge aus den gespeicherten Zustandswertefolgen und
□ zur Bestimmung der Laserreceiver-Richtung abhängig von jenem Drehwinkelbereich, welcher dem der identifizierten Zustandswertefolge entsprechenden Code zugeordnet ist.

13. Laserreceiver zur Verwendung als Teil eines Konstruktionslasersystems nach einem der Ansprüche 1 bis 11, mit mindestens
• einem zumindest sich über einen eindimensionalen Bereich auf dem Laserreceiver erstreckenden Laserstrahl-Detektor, sodass der Laserreceiver ausgebildet ist zur Erzeugung eines Ausgangssignals abhängig von einem Auftreffen des Laserstrahls auf dem Laserstrahl-Detektor, und
• einer Auswerteeinheit zur Bestimmung von einer Laserreceiver-Richtung, in welcher sich der Laserreceiver aus Sicht eines - im Konstruktionslasersystem mit dem Laserreceiver zusammenwirkenden - Rotationslasers befindet, · einem Speicher, in dem gespeichert sind
• eine Vielzahl von definierten Drehwinkelbereichen bezüglich einer Drehung eines Umlenkmittels von dem - im Konstruktionslasersystem mit dem Laserreceiver zusammenwirkenden - Rotationslaser und
• ein den jeweiligen Drehwinkelbereichen jeweils eindeutig zugeordneter digitaler Code aus einer Zustandswertefolge, die auf einer definierten Abfolge von Zuständen bezüglich eines **durch** den - im Konstruktionslasersystem mit dem Laserreceiver zusammenwirkenden - Rotationslaser emittierbaren Laserstrahls basiert, wobei die Zustände aus einer Menge von zumindest zwei definierten unterschiedlichen diskreten Zuständen bezüglich des Laserstrahls stammen, wobei
die Auswerteeinheit ausgebildet ist
• zur Erfassung von einer Ausgangssignal-Folge von nacheinander erzeugten Ausgangssignalen,
• zur Identifikation von einer zu der Ausgangssignal-Folge korrespondierenden Zustandswertefolge aus den gespeicherten Zustandswertefolgen und
• zur Bestimmung der Laserreceiver-Richtung abhängig von jenem Drehwinkelbereich, welcher dem der identifizierten Zustandswertefolge entsprechenden Code zugeordnet ist, **dadurch gekennzeichnet, dass** die Abfolge von Zuständen bezüglich des Laserstrahls über - bei Ablauf von einer Reihe von Drehddurchgängen des Umlenkmittels des Rotationslasers - nacheinander erfolgende Durchquerungen des jeweiligen Drehwinkelbereichs erzeugt wird.

14. Verfahren zur Laserreceiver-Richtungsbestimmung mit
• einem eine Lasereinheit und ein fortlaufend drehbares Umlenkmittel aufweisenden Rotationslaser zum Emittieren eines rotierenden Laserstrahls derart, dass der rotierende Laserstrahl eine Referenzfläche definiert, und
• einem Laserreceiver mit einem zumindest sich über einen eindimensionalen Bereich auf dem Laserreceiver erstreckenden Laserstrahl-Detektor, sodass der Laserreceiver ausgebildet ist zur Erzeugung eines Ausgangssignals abhängig von einem Auftreffen des Laserstrahls auf dem Laserstrahl-Detektor, wobei
für das Verfahren definiert sind
• eine Vielzahl von Drehwinkelbereichen bezüglich einer Drehung des Umlenkmittels und
• ein den jeweiligen Drehwinkelbereichen jeweils eindeutig zugeordneter digitaler Code aus einer Zustandswertefolge, die auf einer definierten Abfolge von Zuständen bezüglich des Laserstrahls basiert, wobei die Zustände aus einer Menge von zumindest zwei definierten unterschiedlichen diskreten Zuständen bezüglich des Laserstrahls stammen, und wobei im Rahmen des Verfahrens erfolgen
• ein Steuern des Emittierens des Laserstrahls hinsichtlich der zumindest zwei unterschiedlichen diskreten Zustände, dass in den jeweiligen Drehwinkelbereichen jeweils die dem jeweiligen Drehwinkelbereich entsprechende Abfolge von Zuständen bezüglich des Laserstrahls erzeugt wird,
• ein Erfassen von einer Ausgangssignal-Folge von nacheinander eintreffenden Ausgangssignalen,
• ein Identifizieren von einer zu der Ausgangssignal-Folge korrespondierenden Zustandswertefolge aus den gespeicherten Zustandswertefolgen und
• ein Bestimmen von einer Laserreceiver-Richtung, in welcher sich der Laserreceiver aus Sicht des Rotationslasers befindet, abhängig von jenem Drehwinkelbereich, welcher dem der identifizierten Zustandswertefolge entsprechenden Code zugeordnet ist, **dadurch gekennzeichnet, dass** das Steuern der Lasereinheit umlenkmitteldrehungssynchron erfolgt, derart dass die Abfolge von Zuständen bezüglich des Laserstrahls über - bei Ablauf von einer Reihe von Drehddurchgängen des Umlenkmittels - nacheinander erfolgende Durchquerungen des jeweiligen Drehwinkelbereichs erzeugt wird.

15. Computerprogrammprodukt mit auf einem maschinenlesbaren Träger gespeichertem Programmcode zur Durchführung des Verfahrens nach Anspruch 14, insbesondere wenn der Programmcode auf einer elektronischen Datenverarbeitungseinheit ausgeführt wird, im Speziellen wobei die elektronische Datenverarbeitungseinheit als Steuer- und Auswerteeinheit des Konstruktionslasersystems nach einem der Ansprüche 1 bis 11, als Steuer- und Auswerteeinheit des Rotationslasers nach Anspruch 12 oder als Auswerteeinheit des Laserreceivers nach Anspruch 13 dient.

## Claims

1. Construction laser system, comprising at least
• a rotation laser, having a laser unit and a continuously rotatable deflection means, for emission of a rotating laser beam such that the rotating laser beam defines a reference surface,
• a laser receiver having a laser beam detector extending at least over a one-dimensional region on the laser receiver, so that the laser receiver is formed in order to generate an output signal as a function of incidence of the laser beam on the laser beam detector,
• an evaluation unit for determining a laser receiver direction, in which the laser receiver lies in sight of the rotation laser,
• a memory in which the following are stored:
□ a multiplicity of defined rotation angle ranges relating to rotation of the deflection means, and
□ a digital code respectively assigned uniquely to the respective rotation angle ranges, and consisting of a state value sequence which is based on a defined sequence of states relating to the laser beam, the states being taken from a set of at least two defined different discrete states relating to the laser beam,
and
• a control unit for control of the at least two different discrete states, such that, in the respective rotation angle ranges, the sequence of states relating to the laser beam, which corresponds to the respective rotation angle range, is respectively generated,
• wherein the evaluation unit is formed
□ in order to acquire an output signal sequence of successively generated output signals,
□ in order to identify a state value sequence among the stored state value sequences, which corresponds to the output signal sequence, and
□ in order to determine the laser receiver direction as a function of that rotation angle range which is assigned to the code corresponding to the identified state value sequence,
**characterized in that**
the control of the laser unit is effected synchronous with the rotatable deflection means such that the sequence of states with respect to the laser beam is generated by means of successively occurring crossings of the respective rotation angle range, in the course of a series of rotational passes of the deflection means.

2. Construction laser system according to Claim 1,
**characterized in that**
the rotation angle ranges stored in the memory are defined over a circumferential range of at least 180°, in particular over 360°, in relation to rotation of the deflection means,
in particular with at least 30, in particular at least 100, especially at least 500, rotation angle ranges respectively of equal width being defined over the circumferential range.

3. Construction laser system according to Claim 1 or 2,
**characterized in that**
the codes stored in the memory are defined in such a way that neighbor pairs of state value sequences of codes, which are respectively assigned to directly neighboring rotation angle ranges, respectively differ by only one value.

4. Construction laser system according to any one of the preceding claims,
**characterized in that**
• the codes stored in the memory are defined in such a way that the state value sequences respectively comprise a state value sequence membership of at least five state values, in particular with the control unit being formed for control of the laser unit such that the respective sequences of states are generated with a series of rotational passes corresponding in number to the state value sequence membership, in particular with the same number, and/or
• the states are taken from a set of precisely two defined different discrete states relating to the laser beam.

5. Construction laser system according to any one of the preceding claims,
**characterized in that**
• at least two of the at least two defined different discrete states relating to the laser beam are given by switching of the laser beam on or off, and/or
• the at least two defined different discrete states differ by
□ different discrete intensity values of the laser beam and/or
□ different discrete modulation frequencies of the laser beam.

6. Construction laser system according to any one of the preceding claims,
**characterized in that**
• the evaluation unit and/or the laser receiver are formed in order to evaluate the output signals - acquired in the scope of the output signal sequence - in relation to the at least two defined different discrete states and in order to attach corresponding information to the output signals, and
• the evaluation unit is formed in order to identify the corresponding state value sequence by using the information attached to the respective output signals.

7. Construction laser system according to any one of the preceding claims, wherein at least two of the at least two defined different discrete states relating the laser beam are given by switching of the laser beam on or off,
**characterized in that**
• the laser receiver is formed in order to generate the output signal with information attached relating to an incidence time of the laser beam on the laser beam detector, and/or
• the evaluation unit is formed in order to attach information relating to a reception time to the respective transmitted output signals,
so that the respective output signals of the output signal sequence respectively have time information attached as a function of the incidence of the laser beam on the laser beam detector,
and **in that** the evaluation unit can thereby identify the state value sequence corresponding to the acquired output signal sequence by using the time information attached to the output signals of the acquired output signal sequence.

8. Construction laser system according to any one of the preceding claims,
**characterized in that**
the evaluation unit is formed in order to acquire the output signal sequence, in order to identify the state value sequence and in order to determine the laser receiver direction on the basis of
• the stored defined rotation angle ranges and the stored codes assigned thereto and respectively consisting of a state value sequence,
and in particular on the basis of
• the trigger signal,
• the number of rotational passes of the series of rotational passes and/or
• knowledge about a defined constant rotation speed of the deflection means.

9. Construction laser system according to any one of the preceding claims,
**characterized in that**
a specific direction, in particular the direction corresponding to the respective rotation angle range bisectors, is respectively stored in the memory for the respective rotation angle ranges, and the evaluation unit is formed in order to retrieve the direction stored for that rotation angle range which is assigned to the code corresponding to the identified state value sequence, and this retrieved direction can be determined and output as the laser receiver direction.

10. Construction laser system according to any one of the preceding claims,
**characterized in that**
means are provided in the rotation laser for making available continuous angle information relating to a respective current rotational position of the deflection means
• having an angle encoder for continuous measurement of the respective current rotational position of the deflection means, or
• having a defined zero angle mark for a rotation of the deflection means and a zero angle mark sensor, so that a respective current rotational position of the deflection means can be derived continuously by means of an output of the zero angle mark sensor together with knowledge about a defined constant rotation speed of the deflection means,
and **in that** the control by the control unit, synchronized with the deflection means rotation, is based on
• the stored defined rotation angle ranges and the stored codes assigned thereto and respectively consisting of a state value sequence,
• the continuous angle information made available relating to the respective current rotational position of the deflection means, or the knowledge continuously currently derivable therefrom regarding that of the defined rotation angle ranges in which the deflection means lies with regard to its respective current rotational position, and
• counting of the individual rotational passes in the course of the series of rotational passes of the deflection means, of which counting the control unit is capable, and derivable knowledge associated therewith regarding that rotational pass of the series of rotational passes in which the deflection means respectively currently lies.

11. Construction laser system according to any one of the preceding claims,
**characterized in that**
the rotation laser
• is formed as a self-leveling rotation laser and, in particular, a dual-grade rotation laser, and/or
• is equipped with one of the following further functionalities:
□ grade catch,
□ grade lock, in particular with tracking,
□ axis alignment, and/or
□ field calibration functionality for the self leveling,
and
• is formed in order to use the determinable laser receiver direction in the scope of at least one of the functionalities indicated.

12. Rotation laser for use as a part in the construction laser system according to any one of the preceding claims, having at least one laser unit and a continuously rotatable deflection means, for emission of a rotating laser beam such that the rotating laser beam defines a reference surface,
comprising
• a memory in which the following are stored:
□ a multiplicity of defined rotation angle ranges relating to rotation of the deflection means, and
□ a digital code respectively assigned uniquely to the respective rotation angle ranges, and consisting of a state value sequence which is based on a defined sequence of states relating to the laser beam, the states being taken from a set of at least two defined different discrete states relating to the laser beam,
and
• a control unit for control of the at least two different discrete states, such that, in the respective rotation angle ranges, the sequence of states relating to the laser beam, which corresponds to the respective rotation angle range, is respectively generated,
**characterized in that**
the control of the laser unit is effected synchronous with the rotatable deflection means such that the sequence of states with respect to the laser beam is generated by means of successively occurring crossings of the respective rotation angle range, in the course of a series of rotational passes of the deflection means,
in particular wherein the rotation laser furthermore comprises
• a communication interface for receiving an output signal - generatable by a laser receiver which the rotating laser beam strikes - dependent on the laser beam incidence, and
• an evaluation unit for determining a laser receiver direction, in which a laser receiver which the rotating laser beam strikes lies in sight of the rotation laser, which evaluation unit is formed
□ in order to acquire an output signal sequence of output signals successively arriving via the communication interface,
□ in order to identify a state value sequence among the stored state value sequences, which corresponds to the output signal sequence, and
□ in order to determine the laser receiver direction as a function of that rotation angle range which is assigned to the code corresponding to the identified state value sequence.

13. Laser receiver for use as a part in the construction laser system according to any one of Claims 1 to 11, having at least
• a laser beam detector extending at least over a one-dimensional region on the laser receiver, so that the laser receive is formed to generate an output signal as a function of incidence of the laser beam on the laser beam detector,
• an evaluation unit for determining a laser receiver direction, in which the laser receiver lies in sight of a rotation laser - interacting with the laser receiver in the construction laser system, and
• a memory in which the following are stored:
□ a multiplicity of defined rotation angle ranges relating to rotation of a deflection means of the rotation laser - interacting with the laser receiver in the construction laser system, and
□ a digital code respectively assigned uniquely to the respective rotation angle ranges, and consisting of a state value sequence which is based on a defined sequence of states relating to a laser beam which can be emitted by the rotation laser interacting with the laser receiver in the construction laser system, the states being taken from a set of at least two defined different discrete states relating to the laser beam,
wherein
the evaluation unit is formed
• in order to acquire an output signal sequence of successively generated output signals,
• in order to identify a state value sequence among the stored state value sequences, which corresponds to the output signal sequence, and
• in order to determine the laser receiver direction as a function of that rotation angle range which is assigned to the code corresponding to the identified state value sequence,
**characterized in that**
the sequence of states with respect to the laser beam is generated by means of successively occurring crossings of the respective rotation angle range, in the course of a series of rotational passes of the deflection means of the rotation laser.

14. Method for laser receiver direction determination, with
• a rotation laser, having a laser unit and a continuously rotatable deflection means, for emission of a rotating laser beam such that the rotating laser beam defines a reference surface, and
• a laser receiver having a laser beam detector extending at least over a one-dimensional region on the laser receiver, so that the laser receiver is formed in order to generate an output signal as a function of incidence of the laser beam on the laser beam detector,
wherein
the following are defined for the method:
• a multiplicity of rotation angle ranges relating to rotation of the deflection means and
• a digital code respectively assigned uniquely to the respective rotation angle ranges, and consisting of a state value sequence which is based on a defined sequence of states relating to the laser beam, the states being taken from a set of at least two defined different discrete states relating to the laser beam, and wherein
the following are carried out in the scope of the method:
• a control of the emission of the laser beam in relation to the at least two different discrete states, such that, in the respective rotation angle ranges, the sequence of states relating to the laser beam, which corresponds to the respective rotation angle range, is respectively
• acquisition of an output signal sequence of successively arriving output signals,
• identification of a state value sequence among the stored state value sequences, which corresponds to the output signal sequence, and
• determination of a laser receiver direction in which the laser receiver lies in sight of the rotation laser, as a function of that rotation angle range which is assigned to the code corresponding to the identified state value sequence.
**characterized in that**
the control of the laser unit is effected synchronous with the rotatable deflection means such that the sequence of states with respect to the laser beam is generated by means of successively occurring crossings of the respective rotation angle range, in the course of a series of rotational passes of the deflection means.

15. Computer program product having program code which is stored on a machine-readable medium for carrying out the method according to Claim 14,
in particular when the program is run on an electronic data processing unit, the electronic data processing unit being used in particular as a control and evaluation unit of the construction laser system according to any one of Claims 1 to 11, as a control and evaluation unit of the rotation laser according to Claim 12, or as an evaluation unit of the laser receiver according to Claim 13.

## Revendications

1. Système laser de construction avec au moins
• un laser de rotation qui présente une unité laser et un moyen de déviation rotatif en continu pour l'émission d'un faisceau laser rotatif de telle manière que le faisceau laser rotatif définisse une surface de référence,
• un récepteur laser avec un détecteur de faisceau laser qui s'étend au moins sur une zone unidimensionnelle sur le récepteur laser si bien que le récepteur laser est configuré pour générer un signal de sortie en fonction d'un impact du faisceau laser sur le détecteur de faisceau laser,
• une unité d'évaluation pour déterminer une direction du récepteur laser dans laquelle le récepteur laser se trouve, ceci étant vu à partir du laser de rotation,
• une mémoire dans laquelle sont mémorisés
- une multitude de zones d'angle de rotation définies pour ce qui est d'une rotation du moyen de déviation et
- un code numérique associé de manière respectivement univoque aux zones respectives d'angle de rotation à partir d'une séquence de valeurs d'état qui se base sur une séquence définie d'états pour ce qui est du faisceau laser, cependant que les états proviennent d'une quantité d'états discrets différents définis au moins au nombre de deux pour ce qui est du faisceau laser,
et
• une unité de commande pour la commande de l'unité laser pour générer les états discrets différents qui sont au moins de deux de telle manière que la séquence d'états pour ce qui est du faisceau laser qui correspond à la zone respective d'angle de rotation soit générée dans les zones respectives d'angle de rotation,
• cependant que l'unité d'évaluation est configurée
- pour la génération d'une séquence de signaux de sortie de signaux de sortie générés l'un après l'autre,
- pour l'identification d'une séquence de valeurs d'état qui correspond à la séquence de signaux de sortie à partir des séquences de valeurs d'état mémorisées et
- pour la détermination de la direction du récepteur laser en fonction de la zone d'angle de rotation qui est associée au code qui correspond à la séquence de valeurs d'état identifiée,
**caractérisé en ce que**
la commande de l'unité laser se fait de manière synchrone à la rotation du moyen de déviation de telle manière que la séquence d'états pour ce qui est du faisceau laser est produite par des traversées effectuées l'une après l'autre de la zone respective d'angle de rotation - lors du parcours d'une série de passages de rotation du moyen de déviation.

2. Système laser de construction selon la revendication 1, **caractérisé en ce que** les zones d'angle de rotation mémorisées dans la mémoire sont définies sur une zone circonférentielle d'au moins 180°, en particulier de 360°, pour ce qui est d'une rotation du moyen de déviation, en particulier cependant qu'au moins 30, en particulier au moins 100, spécialement au moins 500 zones d'angle de rotation respectivement équidistantes sont définies sur la zone circonférentielle.

3. Système laser de construction selon la revendication 1 ou 2, **caractérisé en ce que** les codes mémorisés dans la mémoire sont définis de telle manière que des paires voisines de valeurs d'état de codes qui sont associées à des zones d'angles de rotation respectivement directement voisines ne se distinguent respectivement que d'une valeur.

4. Système laser de construction selon l'une des revendications précédentes, **caractérisé en ce que**
• les codes mémorisés dans la mémoire sont définis de telle manière que les séquences de valeurs d'état comprennent respectivement un nombre d'éléments de séquence de valeurs d'état d'au moins cinq valeurs d'état, en particulier cependant que l'unité de commande est configurée pour la commande de l'unité laser de telle manière que les séquences respectives d'états sont générées pour une série de passages de rotation qui correspond quant à leur nombre au nombre d'éléments de séquence de valeurs d'état, en particulier d'une série de même nombre, et/ou
• les états proviennent d'une quantité d'exactement deux états discrets différents définis pour ce qui est du faisceau laser.

5. Système laser de construction selon l'une des revendications précédentes, **caractérisé en ce**
• **qu'**au moins deux des états discrets différents définis qui sont au moins au nombre de deux pour ce qui est du faisceau laser sont donnés par un faisceau laser mis en marche ou arrêté et/ou
• **que** les deux états discrets différents définis qui existent au moins se distinguent par
□ des valeurs d'intensité discrètes différentes du faisceau laser et/ou
□ des fréquences de modulation discrètes différentes du faisceau laser.

6. Système laser de construction selon l'une des revendications précédentes, **caractérisé en ce que**
• l'unité d'évaluation et/ou le récepteur laser sont configurés pour l'évaluation des signaux de sortie - saisis dans le cadre de la séquence de signaux de sortie - pour ce qui est des états discrets différents définis qui sont au moins au nombre de deux et pour la dotation des signaux de sortie d'une information correspondante et
• l'unité d'évaluation est configurée pour l'identification de la séquence de valeurs d'état correspondante en ayant recours à l'information adhérente aux signaux de sortie respectifs.

7. Système laser de construction selon l'une des revendications précédentes, cependant qu'au moins deux des états discrets différents définis qui sont au moins au nombre de deux pour ce qui est du faisceau laser sont donnés par un faisceau laser mis en marche ou arrêté, **caractérisé en ce que**
• le récepteur laser est configuré pour générer le signal de sortie doté de l'information pour ce qui est d'un moment d'impact du faisceau laser sur le détecteur de faisceaux laser et/ou
• l'unité d'évaluation est configurée pour la dotation des signaux de sortie transmis respectifs de l'information pour ce qui est d'un moment de réception si bien que les signaux de sortie respectifs de la séquence de signaux de sortie sont dotés respectivement d'une information de temps qui dépend de l'impact du faisceau laser sur le détecteur de faisceaux laser et que la séquence de valeurs d'état qui correspond à la séquence de signaux de sortie saisis peut ainsi être identifiée par l'unité d'évaluation en ayant recours aux informations de temps adhérentes aux signaux de sortie de la séquence de signaux de sortie saisis.

8. Système laser de construction selon l'une des revendications précédentes, **caractérisé en ce que** l'unité d'évaluation est configurée pour la saisie de la séquence de signaux de sortie, pour l'identification de la séquence de valeurs d'état et pour la détermination de la direction du récepteur laser sur la base
• des zones d'angle de rotation définies mémorisées et des codes mémorisés qui leur sont associés à partir de respectivement une séquence de valeurs d'état ainsi qu'en particulier
• d'un signal de déclenchement,
• du nombre de passages de rotation de la série de passages de rotation et/ou
• de la connaissance d'une valeur de rotation constante définie du moyen de déviation.

9. Système laser de construction selon l'une des revendications précédentes, **caractérisé en ce que** respectivement une direction concrète, en particulier la direction qui correspond à la bissectrice de la zone respective de l'angle de rotation, est mémorisée dans la mémoire pour les zones d'angle de rotation respectives et que l'unité d'évaluation est configurée pour l'extraction de la direction mémorisée pour la zone d'angle de rotation qui est associée au code qui correspond à la séquence de valeurs d'état identifiées et que cette direction extraite peut être déterminée et sortie en tant que direction du récepteur laser.

10. Système laser de construction selon l'une des revendications précédentes, **caractérisé en ce qu'**il existe du côté du laser de rotation des moyens pour mettre à disposition une information d'angle continue pour ce qui est d'une position de rotation respectivement actuelle du moyen de déviation
• avec un codeur d'angle pour la mesure en continu de la position de rotation respectivement actuelle du moyen de déviation ou
• avec un repère défini de l'angle zéro pour une rotation du moyen de déviation et un capteur de repère de l'angle zéro si bien qu'une position de rotation respectivement actuelle du moyen de déviation puisse être dérivée en continu par une sortie du capteur de repère de l'angle zéro avec la connaissance d'une valeur de rotation constante définie du moyen de déviation
et que la commande synchronisée avec la rotation du moyen de déviation par l'unité de commande se base sur
• les zones d'angle de rotation définies mémorisées et les codes mémorisés qui leur sont associés à partir de respectivement une séquence de valeurs d'état,
• l'information d'angle continue rendue disponible pour ce qui est de la position de rotation respectivement actuelle du moyen de déviation ou de la connaissance qui peut en être dérivée actuellement en continu de laquelle des zones d'angle de rotation définies le moyen de déviation se trouve pour ce qui est de sa position de rotation respectivement actuelle et
• d'un comptage des différents passages de rotation lors du parcours de la série de passages de rotation du moyen de déviation, comptage dont l'unité de commande est capable et d'une connaissance qui peut en être dérivée qui lui est liée du passage de rotation de la série de passages de rotation dans lequel le moyen de déviation se trouve respectivement actuellement.

11. Système laser de construction selon l'une des revendications précédentes, **caractérisé en ce que** le laser de rotation
• est configuré comme un laser de rotation self-levelling et en particulier comme un laser de rotation dual-grade et/ou
• est équipé d'une des fonctionnalités supplémentaires suivantes :
□ grade-catch,
□ grade-lock, en particulier avec suivi,
□ alignement d'axe et/ou
□ fonctionnalité de calibrage de champ pour le self-levelling et est aussi configuré pour utiliser la direction du récepteur laser qui peut être déterminée dans le cadre d'au moins l'une des fonctionnalités données.

12. Laser de rotation pour l'utilisation en tant que partie d'un système laser de construction selon l'une des revendications précédentes avec au moins une unité laser et un moyen de déviation rotatif en continu pour l'émission d'un faisceau laser rotatif de telle manière que le faisceau laser rotatif définisse une surface de référence, une mémoire dans laquelle sont mémorisés
• une multitude de zones d'angle de rotation définies pour ce qui est d'une rotation du moyen de déviation et
• un code numérique associé de manière respectivement univoque aux zones respectives d'angle de rotation provenant d'une séquence de valeurs d'état qui se base sur une séquence définie d'états pour ce qui est du faisceau laser, cependant que les états proviennent d'une quantité d'états discrets différents au moins définis pour ce qui est du faisceau laser et
avec une unité de commande pour la commande de l'unité laser pour générer les états discrets différents qui sont au moins de deux de telle manière que la séquence d'états pour ce qui est du faisceau laser qui correspond à la zone respective d'angle de rotation soit générée dans les zones respectives d'angle de rotation,
**caractérisé en ce que** la commande de l'unité laser se fait de manière synchrone avec la rotation du moyen de déviation de telle manière que la séquence d'états pour ce qui est du faisceau laser est générée par des traversées effectuées l'une après l'autre de la zone respective d'angle de rotation - lors du parcours d'une série de passages de rotation du moyen de déviation, en particulier cependant que le laser de rotation comprend de plus
• une interface de communication pour la réception d'un signal de sortie dépendant de l'impact du faisceau laser - qui peut être généré par un récepteur laser sur lequel le faisceau laser rotatif a un impact - et
• une unité d'évaluation pour déterminer une direction du récepteur laser dans laquelle le récepteur laser se trouve, ceci étant à partir du laser de rotation qui est configurée
□ pour la saisie d'une séquence de signaux de sortie de signaux de sortie qui arrivent l'un après l'autre par l'interface de communication,
□ pour l'identification d'une séquence de valeurs d'état qui correspond à la séquence de signaux de sortie à partir des séquences de valeurs d'état mémorisées et
□ pour la détermination de la direction du récepteur laser en fonction de la zone d'angle de rotation qui est associée au code qui correspond à la séquence de valeurs d'état identifiée.

13. Récepteur laser pour l'utilisation en tant que partie d'un système laser de construction selon l'une des revendications 1 à 11 avec au moins
• un détecteur de faisceaux laser qui s'étend au moins sur une zone unidimensionnelle sur le récepteur laser si bien que le récepteur laser est configuré pour générer un signal de sortie en fonction d'un impact du faisceau laser sur le détecteur de faisceaux laser,
• une unité d'évaluation pour déterminer une direction du récepteur laser dans laquelle le récepteur laser se trouve, ceci étant vu à partir du laser de rotation, et
• une mémoire dans laquelle sont mémorisés
- une multitude de zones d'angle de rotation définies pour ce qui est d'une rotation d'un moyen de déviation du laser de rotation qui coopère avec le récepteur laser dans le système laser de construction et
- un code numérique associé de manière respectivement univoque aux zones respectives d'angle de rotation qui se base sur une séquence définie d'états pour ce qui est d'un faisceau laser qui peut être émis par le laser de rotation qui coopère avec le récepteur laser dans le système laser de construction, cependant que les états proviennent d'une quantité d'états discrets différents définis qui sont au moins de deux pour ce qui est du faisceau laser,
cependant que l'unité d'évaluation est configurée
• pour la saisie d'une séquence de signaux de sortie de signaux de sortie qui sont générés l'un après l'autre,
• pour l'identification d'une séquence de valeurs d'état qui correspond à la séquence de signaux de sortie à partir des séquences de valeurs d'état mémorisées et
• pour la détermination de la direction du récepteur laser en fonction de la zone d'angle de rotation qui est associée au code qui correspond à la séquence de valeurs d'état identifiée,
**caractérisé en ce que**
la séquence d'états pour ce qui est du faisceau laser est générée par des traversées effectuées l'une après l'autre de la zone respective d'angle de rotation - lors du parcours d'une série de passages de rotation du moyen de déviation.

14. Procédé pour la détermination de la direction d'un récepteur laser avec
• un laser de rotation qui présente une unité laser et un moyen de déviation rotatif en continu pour l'émission d'un faisceau laser rotatif de telle manière que le faisceau laser rotatif définisse une surface de référence,
• un récepteur laser avec un détecteur de faisceaux laser qui s'étend au moins sur une zone unidimensionnelle sur le récepteur laser si bien que le récepteur laser est configuré pour générer un signal de sortie en fonction d'un impact du faisceau laser sur le détecteur de faisceaux laser,
cependant qu'il est défini pour le procédé
• une multitude de zones d'angle de rotation pour ce qui est d'une rotation du moyen de déviation et
• un code numérique associé de manière respectivement univoque aux zones respectives d'angle de rotation qui se base sur une séquence définie d'états pour ce qui est du faisceau laser, cependant que les états proviennent d'une quantité d'états discrets différents définis qui sont au moins de deux pour ce qui est du faisceau laser et cependant qu'il est effectué dans le cadre du procédé
• une commande de l'émission du faisceau laser pour ce qui est des états discrets différents définis qui sont au moins au nombre de deux de telle manière que la séquence d'états pour ce qui est du faisceau laser qui correspond à la zone respective d'angle de rotation soit générée dans les zones respectives d'angle de rotation,
• une saisie d'une séquence de signaux de sortie de signaux de sortie qui arrivent l'un après l'autre,
• une identification d'une séquence de valeurs d'état qui correspond à la séquence de signaux de sortie à partir des séquences de valeurs d'état mémorisées et
• une détermination d'une direction du récepteur laser dans laquelle se trouve le récepteur laser, ceci étant vu à partir du laser de rotation, en fonction de la zone d'angle de rotation qui est associée au code qui correspond à la séquence de valeurs d'état identifiée,
**caractérisé en ce que**
la commande de l'unité laser se fait se manière synchrone avec la rotation du moyen de déviation de telle manière que la séquence d'états pour ce qui est du faisceau laser est générée par des traversées effectuées l'une après l'autre de la zone respective d'angle de rotation - lors du parcours d'une série de passages de rotation du moyen de déviation.

15. Produit de programme d'ordinateur avec un code de programme qui est mémorisé sur un support qui peut être lu par une machine pour l'exécution du procédé selon la revendication 14, en particulier lorsque le code de programme est exécuté sur une unité de traitement de données électronique, spécialement cependant que l'unité de traitement de données électronique sert d'unité de commande et d'évaluation du système laser de construction selon l'une des revendications 1 à 11, en tant qu'unité de commande et d'évaluation du laser de rotation selon la revendication 12 ou en tant qu'unité d'évaluation du récepteur laser selon la revendication 13.
